(19) Europäisches Patentamt
European Patent Office
Office européen des brevets

(11) **EP 4 354 823 A1**

(12) **DEMANDE DE BREVET EUROPEEN**

(43) Date de publication:
**17.04.2024   Bulletin 2024/16**

(21) Numéro de dépôt: **23202895.1**

(22) Date de dépôt: **11.10.2023**

(51) Classification Internationale des Brevets (IPC):
***H04L 45/0377*** *(2022.01)*       ***H04L 45/00*** *(2022.01)*
***H04L 45/50*** *(2022.01)*       ***H04L 45/64*** *(2022.01)*

(52) Classification Coopérative des Brevets (CPC):
**H04L 45/50; H04L 45/0377; H04L 45/34; H04L 45/64**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **14.10.2022   FR 2210571**

(71) Demandeur: **Orange**
**92130 Issy-les-Moulineaux (FR)**

(72) Inventeurs:
• **VERDIER, Matthieu**
  **92326 CHATILLON CEDEX (FR)**
• **WARY, Jean-Philippe**
  **92326 CHATILLON CEDEX (FR)**
• **MACARIO-RAT, Gilles**
  **92326 CHATILLON CEDEX (FR)**

(74) Mandataire: **Cabinet Beau de Loménie**
**158, rue de l'Université**
**75340 Paris Cedex 07 (FR)**

(54) **PROCÉDÉ DE MISE EN OEUVRE D'UN SERVICE D'UNE CHAÎNE DE SERVICES ET DISPOSITIF ÉLECTRONIQUE ASSOCIÉ**

(57)    L'invention concerne un procédé de mise en oeuvre d'un service, dit service courant, d'une chaîne de n services, le procédé comprenant :
la réception, en provenance du service précédent le service courant dans la chaîne, d'un premier jeton de routage comprenant des données de routage de messages entre les services de la chaîne ;
la vérification que le service courant est un destinataire légitime du premier jeton de routage ;
la mise en oeuvre d'une fonction du service courant ;
la génération d'un jeton de chaînage, dit jeton de chaînage courant à partir d'une donnée de preuve d'un passage par le service courant ; et,
la transmission, à destination du service suivant le service courant dans la chaîne, du jeton de chaînage courant et d'un deuxième jeton de routage déterminé à partir du premier jeton de routage.

[Fig.1]

EP 4 354 823 A1

**Description**

Domaine Technique

La présente invention appartient au domaine général des transactions générées en mettant en oeuvre une séquence de services chaînés entre eux. Elle concerne plus particulièrement un procédé de mise en oeuvre d'un service d'une chaîne de services. Elle concerne également un dispositif électronique de mise en oeuvre d'au moins un service, un procédé de vérification d'une chaîne de services, et un dispositif électronique de vérification d'une chaîne de services.

Technique antérieure

Les architectures orientées services permettent de concevoir une transaction comme un ensemble de services interconnectés, accessibles au travers de protocoles standards. Typiquement, pour concevoir cette transaction, un flux de données accède à une chaîne de services dans un ordre particulier, c'est-à-dire à un ensemble de services chaînés entre eux et accessibles au travers d'un réseau de télécommunication.

Dès lors, les processus de transmission de données doivent respecter des conditions de certification et de sécurité suffisamment strictes pour garantir la fiabilité du routage des flux de données échangées.

Dans ce contexte, des solutions d'ingénierie de trafic sont actuellement connues qui permettent de contrôler et réguler la transmission de données dans un réseau de communications. Certaines, comme les solutions de routage par segment («Segment Routing », selon la terminologie anglo-saxonne) ou de chaînage de fonctions service («Service Function Chaining », selon la terminologie anglo-saxonne) mettent en oeuvre des instructions spécifiques qui permettent de garantir le bon acheminement de données vers une destination spécifique.

Toutefois, et bien qu'elles permettent d'assurer une fiabilité relative du trafic de données dans un réseau, ces solutions ne permettent pas d'adapter la chaîne de services à la volée, par exemple en remplaçant ou en ajoutant un service à la chaîne, voire en adaptant le dispositif électronique mettant en oeuvre un service donné.

Un autre inconvénient est que les approches existantes ne permettent pas de prouver de manière fiable que le trafic a effectivement transité par un dispositif électronique donné et à fortiori que ce dispositif a effectivement mis en oeuvre un service.

Enfin, bien souvent, les dispositifs mettant en oeuvre des services sont gérés par des acteurs différents, et ne sont donc pas soumis aux mêmes règles de sécurité. Or, une coopération stricte entre plusieurs acteurs complique le respect de règles et de contrôle uniformes.

Il existe donc une nécessiter de proposer une approche plus flexible, mais également qui puisse garantir l'atomicité d'une transaction nécessitant l'application d'une séquence de services, et ce, même si les niveaux de sécurité appliqués par les dispositifs électroniques mettant en oeuvre ces services diffèrent.

Exposé de l'invention

La présente invention a pour objectif de remédier à tout ou partie des inconvénients de l'art antérieur, notamment ceux exposés ci-avant, en proposant une solution qui permette de générer de manière flexible une transaction comme une séquence de plusieurs services, et qui puisse garantir l'atomicité de cette transaction, et ce, même si les niveaux de sécurité appliqués par les dispositifs électroniques mettant en oeuvre ces services diffèrent.

Au sens de l'invention, la propriété d'atomicité résulte d'une démonstration de la réalisation d'une transaction globale nécessitant l'application d'une chaîne de services, et ce sans altération sur l'orchestration des services planifiés et sur le déroulé du séquencement des enchainements desdits services.

À cet effet, et selon un premier aspect, l'invention concerne un procédé de mise en oeuvre d'un service, dit service courant, d'une chaîne de n services, le procédé comprenant :

- la réception, en provenance du service précédent le service courant dans la chaîne, d'un premier jeton de routage comprenant des données de routage de messages entre les services de la chaîne ;

- la vérification que le service courant est un destinataire légitime du premier jeton de routage ;

- la mise en oeuvre d'une fonction du service courant ;

- la génération d'un jeton de chaînage, dit jeton de chaînage courant, à partir d'une donnée de preuve d'un passage par le service courant ; et,

- la transmission, à destination du service suivant le service courant dans la chaîne, du jeton de chaînage courant et d'un deuxième jeton de routage déterminé à partir du premier jeton de routage.

L'application du procédé selon l'invention empêche, par la non réalisation d'un service, dit service final, toute altération, soit d'étape de traitement ou de données émises ou reçues au niveau de chacun des services chainés suivant un ordre établi à priori.

Ainsi, le service est rendu de façon atomique dans le sens où toute altération de celui-ci dans sa réalisation entraine un arrêt ou un déni de service. Et à fortiori, la délivrance du service finalisé prouve que le service a été réalisé sans altération et donc qu'il est bien intègre ou « atomique ».

De manière générale, on considère que les étapes d'un procédé ne doivent pas être interprétées comme étant liées à une notion de succession temporelle.

Il est également à noter que le procédé selon l'invention est indépendant des protocoles mis en oeuvre ou des services (e.g., des fonctions mises en oeuvre par lesdits services).

Une fonction mises en oeuvre par un desdits services peut comprendre un traitement sur des données reçues ou l'exécution complète d'un protocole impliquant lui-même une nouvelle chaîne de services au sens de l'invention.

Dans des modes particuliers de mise en oeuvre, le procédé selon l'invention peut comporter en outre l'une ou plusieurs des caractéristiques suivantes, prises isolément ou selon toutes les combinaisons techniquement possibles.

Dans des modes particuliers de mise en oeuvre, le jeton de chaînage courant est généré en fonction du deuxième jeton de routage.

Cette caractéristique est avantageuse puisqu'elle permet de prouver, à un service de contrôle, que le service qui génère un jeton de chaînage a bien reçu un jeton de routage qui lui était destiné.

Dans des modes particuliers de mise en oeuvre, le service courant comprend un identifiant de ce service ; et le procédé comprend en outre l'obtention d'un identifiant de service destinataire par application d'une fonction de déchiffrement au premier jeton de routage, la fonction de déchiffrement utilisant une clef de déchiffrement associée au service courant ; et la vérification que le service courant est un destinataire légitime comprend la comparaison de l'identifiant de service destinataire avec l'identifiant de ce service.

Cet identifiant de service correspond par exemple à une API portée par une URL ; une adresse mail ou un identifiant de messagerie ; un port IP d'un dispositif électronique porté par une adresse IP ; un identifiant porté par un système de messagerie ; un numéro de port sur d'autres protocoles de connectivité locale associé à une adresse logique suivant ces protocoles de communication ; une adresse MAC ; une adresse mémoire ou une interruption au sein d'un dispositif électronique ; un certificat électronique, par exemple conforme à la norme X.509.

Cette caractéristique est avantageuse puisqu'elle permet au service courant de s'assurer, de manière sécurisée, qu'il est le destinataire légitime du jeton de routage et des données transmises avec ce jeton de routage, et à fortiori qu'il correspond au service devant être appliqué, conformément à une chaîne préalablement définie.

Dans des modes particuliers de mise en oeuvre, le deuxième jeton de routage est généré par application d'une fonction de déchiffrement au premier jeton de routage, et la fonction de déchiffrement utilise une clef de déchiffrement associée au service courant.

Cette caractéristique est avantageuse puisqu'elle permet au service courant de déterminer, de manière sécurisée, le service suivant de la chaîne vers lequel des données doivent être transmises.

Dans des modes particuliers de mise en oeuvre, le procédé comprend en outre :

- la génération, par le service courant, de la donnée de preuve d'un passage par le service courant, la donnée étant générée par application d'une fonction de hachage au deuxième jeton de routage ; et,

- la transmission de la donnée par le service courant à destination du service suivant ou à destination d'un service de contrôle.

Cette caractéristique est avantageuse puisque cette donnée de preuve permet au service de contrôle de vérifier le caractère atomique de la transaction, mais également d'identifier le service n'ayant pas été mis en oeuvre conformément à la chaîne.

Dans des modes particuliers de mise en oeuvre, le procédé comprend en outre :

- la réception, par le service courant, d'une donnée *verif*(*i* - 1) de preuve que le service précédent a effectivement été appliqué ; et,

- la transmission de la donnée reçue *verif*(*i* - 1), par le service courant et à destination du service suivant.

Dans des modes particuliers de mise en oeuvre, des fonctions de chiffrement, déchiffrement, signature et identification au niveau du service (*S*(i)) sont basées sur des technologies cryptographiques à clef publique, et référent un certificat électronique associé.

Selon un deuxième aspect, l'invention concerne un procédé de vérification d'une chaîne de n services, le procédé étant mis en oeuvre par un service de contrôle et comprenant :

- la réception d'un jeton de routage $RT(n)$ en provenance du n-ième service de la chaîne, d'un jeton de chaînage $CT(n)$ en provenance du n-ième service de la chaîne, et de n données ($verif(i = 1..n)$) de preuve, chaque donnée $verif(i)$ étant générée par un service $S(i)$ de la chaîne ;

- la vérification que le service de contrôle est un destinataire légitime du jeton de routage ; et,

- la vérification d'un passage par les n services de la chaîne, par traitement du jeton de chaînage et des n données de preuve.

Dans des modes particuliers de mise en oeuvre, le service de contrôle comprend un identifiant de ce service de contrôle, et le procédé comprend en outre l'obtention, par le service de contrôle, d'un identifiant de service destinataire par application d'une fonction de déchiffrement au jeton de routage $RT(n)$, la fonction de déchiffrement utilisant une clef de déchiffrement associée au service de contrôle ; et, la vérification que le service de contrôle est un destinataire légitime comprend la comparaison de l'identifiant de service destinataire avec l'identifiant de ce service de contrôle.

Cette caractéristique est avantageuse puisqu'elle permet au service de contrôle de s'assurer, de manière sécurisée, qu'il est le destinataire légitime du jeton de routage et des données transmises avec ce jeton de routage.

Dans des modes particuliers de mise en oeuvre, le procédé comprend en outre

- l'obtention, par le service de contrôle, d'une première valeur secrète utilisée pour la génération d'un jeton de routage $RT(0)$ préalablement transmis au premier service de la chaîne ;

- l'obtention, par le service de contrôle, d'une deuxième valeur secrète par application d'une fonction de déchiffrement au jeton de routage $RT(n)$, la fonction de déchiffrement utilisant une clef de déchiffrement associée au service de contrôle ; et,

- la comparaison, par le service de contrôle, de la première valeur secrète et de la deuxième valeur secrète.

Cette caractéristique est avantageuse puisqu'elle permet au service de contrôle de s'assurer que le jeton de routage reçu est issu d'un traitement, par différents services, d'un jeton de routage initial que ce service de contrôle avait initialement généré.

Dans des modes particuliers de mise en oeuvre, la vérification d'un passage par les n services de la chaîne comprend :

- le calcul d'un jeton de chaînage en fonction d'une donnée de preuve $verif(i + 1)$, pour $i = n..0$;

- l'obtention un jeton $CT(0)$ ' de référence résultant de l'application d'une fonction de chiffrement à une valeur $verif(0)$ utilisée pour générer un jeton de chaînage $CT(0)$ initial préalablement été transmis au premier service $S(1)$ de la chaîne, la fonction de chiffrement utilisant une clef de chiffrement associée au service de contrôle ; et,

- la comparaison entre le jeton calculé $CT(i)$ pour $i = 0$ et le jeton $CT(0)$ ' de référence.

Dans des modes particuliers de mise en oeuvre, le procédé comprend en outre la génération d'un jeton de routage $RT(0)$ de manière récursive à partir d'un jeton de routage $RT(n)$.

Selon un troisième aspect, l'invention concerne un dispositif électronique de mise en oeuvre d'au moins un service comprenant :

- un module de réception d'un premier jeton de routage comprenant des données de routage de messages entre les services d'une chaîne de services ;

- un module de vérification que le au moins un service est un destinataire légitime du premier jeton de routage ;

- un module de mise en oeuvre d'une fonction du service;

- un module de génération d'un jeton de chaînage à partir d'une donnée de preuve d'un passage par le service courant ; et,

- un module de transmission, à destination du service suivant ledit service dans la chaîne, du jeton de chaînage courant et d'un deuxième jeton de routage déterminé à partir du premier jeton de routage.

Selon un quatrième aspect, l'invention concerne un dispositif électronique de vérification d'une chaîne de n services incluant un service de contrôle comprenant :

- un module de réception d'un jeton de routage $RT(n)$ en provenance du n-ième service de la chaîne, d'un jeton de chaînage $CT(n)$ en provenance du n-ième service de la chaîne, et de n données $verif(i = 1..n)$ de preuve, chaque donnée $verif(i)$ étant générée par un service $S(i)$ de la chaîne ;

- un module de vérification que ledit service de contrôle est un destinataire légitime du jeton de routage $RT(n)$ ; et,

- un module de vérification d'un passage par les n services de la chaîne, par traitement du jeton de chaînage $CT(n)$ et des n données de preuve.

Selon un cinquième aspect, l'invention concerne un système comprenant au moins un dispositif électronique de mise en oeuvre d'au moins un service, et un dispositif électronique de vérification d'une chaîne de n services.
Selon un sixième aspect, l'invention concerne un programme d'ordinateur comportant des instructions pour la mise en oeuvre d'un procédé de mise en oeuvre d'un service ou d'un procédé de vérification d'une chaîne de services, lorsque ledit programme est exécuté par un ordinateur.
Selon un septième aspect, l'invention concerne un support d'enregistrement lisible par un ordinateur sur lequel est enregistré le programme d'ordinateur selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig.1] la figure 1 représente schématiquement un exemple de réalisation d'un système dans lequel l'invention est mise en oeuvre ;

[Fig.2A] la figure 2A représente schématiquement un mode particulier de mise en oeuvre d'un dispositif électronique de mise en oeuvre d'au moins un service tel que proposé ;

[Fig.2B] la figure 2B représente schématiquement un mode particulier de mise en oeuvre d'un dispositif électronique de vérification d'une chaîne de services tel que proposé ;

[Fig.3A] la figure 3A représente schématiquement un exemple d'architecture matérielle d'un dispositif électronique de mise en oeuvre d'au moins un service ;

[Fig.3B] la figure 3B représente schématiquement un exemple d'architecture matérielle d'un dispositif électronique de vérification d'une chaîne de services ;

[Fig.4] la figure 4 illustre le principe général de l'invention, selon un mode particulier de mise en oeuvre ;

la figure 5 comprend la [Fig.5A] et la [Fig.5B], et représente, sous forme d'ordinogramme, un premier mode particulier de mise en oeuvre d'un procédé général de contrôle d'une transaction résultant du passage par un ensemble de services chaînés tel que proposé, mis en oeuvre dans un système comprenant le dispositif électronique de vérification d'une chaîne de services de la [Fig.2B], et le dispositif électronique de mise en oeuvre d'au moins un service de la [Fig.2A] ;

la figure 6 comprend la [Fig.6A] et la [Fig.6B], et représente, sous forme d'ordinogramme, un deuxième mode particulier de mise en oeuvre d'un procédé général de contrôle d'une transaction résultant de l'application d'un ensemble de services chaînés tel que proposé, mis en oeuvre dans un système comprenant le dispositif électronique de vérification d'une chaîne de services de la [Fig.2B], et le dispositif électronique de mise en oeuvre d'au moins un service de la [Fig.2A] ;

[Fig. 7] la figure 7 représente un exemple de mise en oeuvre de l'invention, conforme au deuxième mode particulier de mise en oeuvre illustré par la figure 6, dans le cadre d'une transaction de type « Mobile Connect ».

Description des modes de réalisation

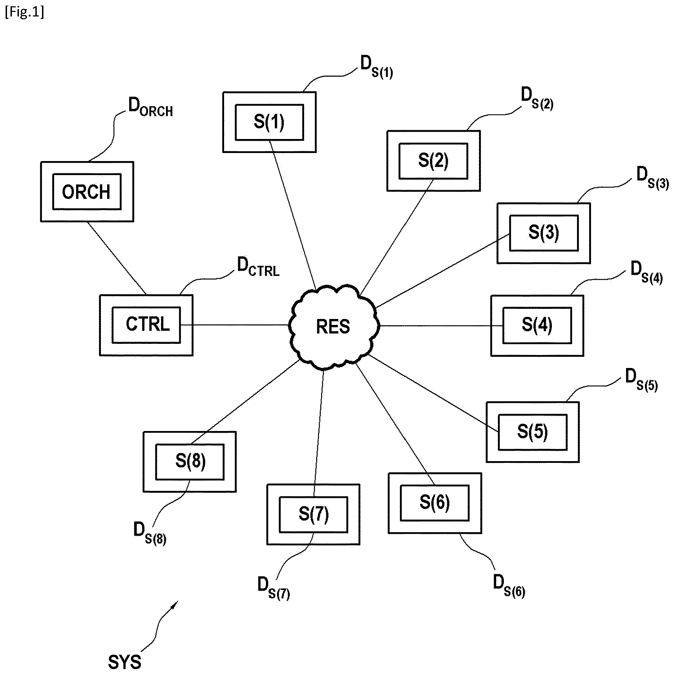

La figure 1 représente schématiquement un exemple de réalisation d'un système SYS dans lequel l'invention est mise en oeuvre.

Le système SYS comprend un premier dispositif $D_{ORCH}$ qui comprend un service ORCH d'orchestration de services, aussi nommé orchestrateur, et qui est configuré pour déterminer une chaîne de services à mettre en oeuvre, de sorte à générer une transaction.

Au sens de l'invention, une chaîne de services (ou séquence de services) est définie comme un ensemble de services chaînés et devant être appliqués dans un ordre prédéterminé, de sorte à générer une transaction. Autrement dit, une transaction peut être définie comme une opération informatique cohérente résultant de la composition de plusieurs services. Cette transaction n'est considérée comme atomique que si tous les services de la chaîne sont parcourus, dans l'ordre établi par cette chaîne de services.

Une chaîne de services peut comprendre une séquence de services tous distincts, mais également plusieurs fois un même service (lorsqu'une transaction nécessite un transit plusieurs fois par un même service).

Au sens de l'invention, un service peut être défini comme un programme informatique (ou logiciel) comprenant un ensemble d'instructions informatiques interprétables par une machine, ce programme étant utilisé pour réaliser une tâche, ou un ensemble de tâches élémentaires.

On rappelle ici que le procédé selon l'invention est indépendant des protocoles mis en oeuvre ou des services (e.g., des fonctions mises en oeuvre par lesdits services).

Cet orchestrateur détermine la chaîne de services à mettre en oeuvre, par exemple en fonction des services disponibles et/ou accessibles, mais également en fonction de contraintes prédéterminées. Cette notion d'orchestration est par ailleurs bien connu de l'homme du métier, on peut citer à titre d'exemple les orchestrateurs : OpenStack™ et Kubernetes™, mais aussi les séquenceurs des opérations pour les machines outils dans le monde industriel comme MapexWom ®.

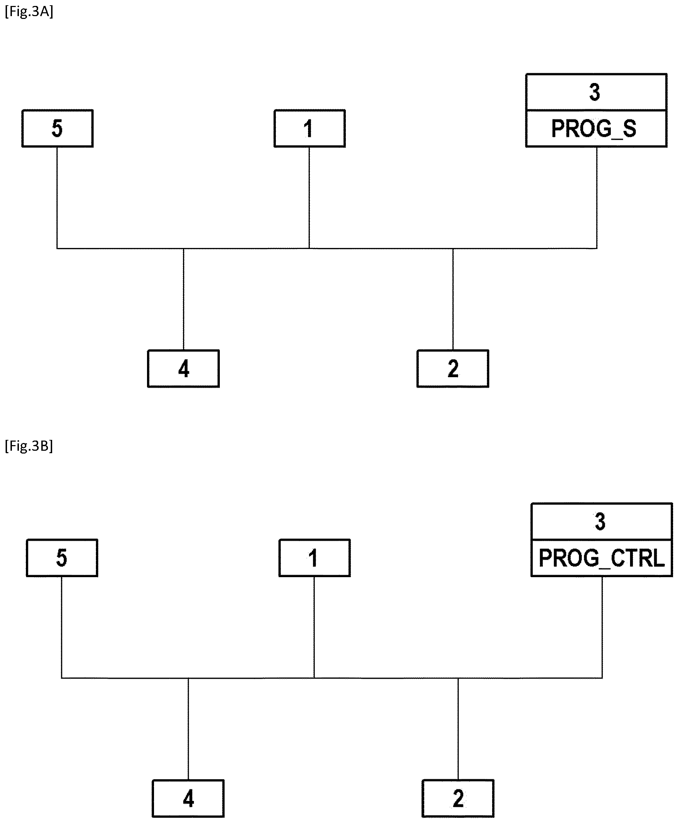

Ce premier dispositif $D_{ORCH}$ est directement connecté à un second dispositif $D_{CTRL}$ mettant en oeuvre un service CTRL de contrôle. Les fonctionnalités de ce service de contrôle sont décrites plus en détail en référence à la figure 3B. Ce dispositif $D_{CTRL}$ est connecté à un réseau de télécommunication RES.

En variante, ce premier dispositif $D_{ORCH}$ est indirectement connecté au second dispositif $D_{CTRL}$, au travers d'un réseau de télécommunication, tel que le réseau de télécommunication RES illustré en figure 1. Aucune limitation n'est attachée au type du réseau de télécommunication RES, qui est par exemple un réseau Internet, un réseau Wifi, ou un réseau de téléphonie fixe ou mobile. En variante, plusieurs types de réseaux de télécommunication RES peuvent être utilisés pour relier les différents dispositifs du réseau entre eux. Par ailleurs, les connexions entre ces différents dispositifs peuvent être de type filaire ou sans fil.

Tel qu'illustré en figure 1, le système SYS comprend en outre huit dispositifs électroniques $D_{S(i=1..8)}$ connectés au réseau de télécommunication RES. Chacun des dispositifs électroniques $D_{S(i=1..8)}$ est configuré pour mettre en oeuvre un service $S(i = 1..8)$.

En variante, un même dispositif électronique $D_{S(i=1..8)}$ est configuré pour mettre en oeuvre plusieurs services. Ainsi, le dispositif $D_{S(1)}$ est par exemple configuré pour mettre en oeuvre les services $S(1)$ et $S(2)$.

Parmi ces huit services disponibles, une chaîne pourrait n'en considérer qu'un sous-ensemble. Ainsi, la chaîne est par exemple telle que $SEQ = [S(1),S(2),S(3),S(3),S(1)]$.

La figure 1 illustre également que les services d'orchestration et de contrôle sont mis en oeuvre par deux dispositifs distincts, $D_{ORCH}$ et $D_{CTRL}$. Cependant, aucune limitation n'est attachée à cette architecture, et ces services d'orchestration et de contrôle peuvent également être mis en oeuvre par un même dispositif.

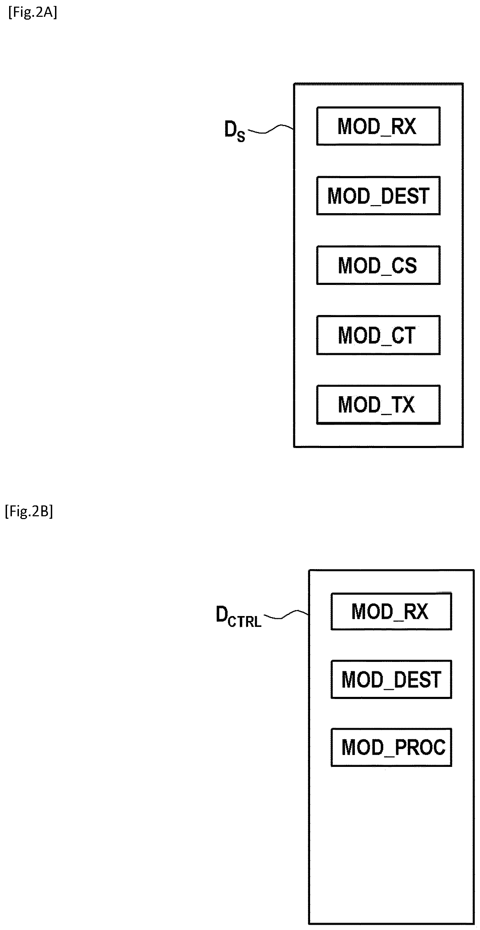

La figure 2A représente schématiquement un mode particulier de mise en oeuvre d'un dispositif électronique de mise en oeuvre d'au moins un service tel que proposé.

La figure 2B représente schématiquement un mode particulier de mise en oeuvre d'un dispositif électronique de vérification d'une chaîne de services tel que proposé.

La figure 3A représente schématiquement un exemple d'architecture matérielle d'un dispositif électronique de mise en oeuvre d'au moins un service.

Tel qu'illustré par la figure 3A, le dispositif électronique $D_S$ de mise en oeuvre d'un service dispose de l'architecture matérielle d'un ordinateur. Ainsi, le dispositif comporte, notamment, un processeur 1, une mémoire vive 2, une mémoire morte 3 et une mémoire non volatile 4. Il comporte en outre un module de communication 5.

La mémoire morte 3 du dispositif $D_S$ constitue un support d'enregistrement tel que proposé, lisible par le processeur 1 et sur lequel est enregistré un programme d'ordinateur PROG_S conforme à l'invention, comportant des instructions pour l'exécution d'étapes du procédé de mise en oeuvre d'un service $S(i)$ tel que proposé ci-après. Le programme PROG_S définit des modules fonctionnels du dispositif tels que représentés à la figure 2A, qui s'appuient ou commandent les éléments matériels 1 à 5 cités précédemment, et qui comprennent notamment :

- un module de réception (MOD_RX) d'un premier jeton de routage ($RT(i - 1)$) comprenant des données de routage de messages entre les services d'une chaîne de services ;

- un module de vérification (MOD_DEST) que le au moins un service est un destinataire légitime du premier jeton de routage ($RT(i - 1)$) ;

- un module de mise en oeuvre (MOD_CS) d'une fonction du service ($S(i)$) ;

- un module de génération (MOD_CT) d'un jeton de chaînage à partir d'une donnée $verif(i)$) de preuve d'un passage par le service courant ($S(i)$) ; et,

- un module de transmission (MOD_TX), à destination du service ($S(i + 1)$) suivant ledit service ($S(i)$) dans la chaîne, du jeton de chaînage courant ($CT(i)$) et d'un deuxième jeton de routage ($RT(i)$) déterminé à partir du premier jeton de routage ($RT(i - 1)$).

Par ailleurs, le dispositif $D_S$ peut encore comporter d'autres modules, notamment pour mettre en oeuvre des modes particuliers du procédé de mise en oeuvre d'un service, comme cela est décrit plus en détail ultérieurement.

Le module de communication 5 du dispositif $D_S$ lui permet notamment de communiquer avec un autre dispositif mettant en oeuvre un autre service, et intègre à cet effet les modules de réception MOD_RX et de transmission MOD_TX, ainsi que des moyens matériels et logiciels tels que ceux décrits ci-avant pour mettre en oeuvre le procédé de mise en oeuvre.

La figure 3B représente schématiquement un exemple d'architecture matérielle d'un dispositif électronique $D_{CTRL}$ de vérification d'une chaîne de services.

Tel qu'illustré par la figure 3B, le dispositif électronique $D_{CTRL}$ de vérification d'une chaîne de services dispose de l'architecture matérielle d'un ordinateur. Ainsi, le dispositif $D_{CTRL}$ comporte, notamment, un processeur 1, une mémoire vive 2, une mémoire morte 3 et une mémoire non volatile 4. Il comporte en outre un module de communication 5.

La mémoire morte 3 du dispositif $D_{CTRL}$ constitue un support d'enregistrement tel que proposé, lisible par le processeur 1 et sur lequel est enregistré un programme d'ordinateur PROG_CTRL conforme à l'invention, comportant des instructions pour l'exécution d'étapes du procédé de vérification d'une chaîne de services tel que proposé ci-après. Le programme PROG_CTRL définit des modules fonctionnels du dispositif tels que représentés à la figure 2B, qui s'appuient ou commandent les éléments matériels 1 à 5 cités précédemment, et qui comprennent notamment :

- un module de réception (MOD_RX) d'un jeton de routage $RT(n)$ en provenance du n-ième service de la chaîne, d'un jeton de chaînage $CT(n)$ en provenance du n-ième service de la chaîne, et de n données ($verif(i = 1..n)$) de preuve, chaque donnée $verif(i)$ étant générée par un service $S(i)$ de la chaîne ;

- un module de vérification (MOD_DEST) que ledit service de contrôle est un destinataire légitime du jeton de routage ($RT(n)$) ; et,

- un module de vérification (MOD_PROC) d'un passage par les n services de la chaîne, par traitement du jeton de chaînage ($CT(n)$) et des n données de preuve.

Par ailleurs, le dispositif $D_{CTRL}$ peut encore comporter d'autres modules, notamment pour mettre en oeuvre des modes particuliers du procédé de vérification, comme cela est décrit plus en détail ultérieurement.

Le module de communication 5 du dispositif $D_{CTRL}$ lui permet notamment de communiquer avec un autre dispositif mettant en oeuvre un service $S(i)$ d'une chaine de services, et intègre à cet effet le module de réception MOD_RX, ainsi que des moyens matériels et logiciels tels que ceux décrits ci-avant pour mettre en oeuvre le procédé de vérification.

Principe de l'invention

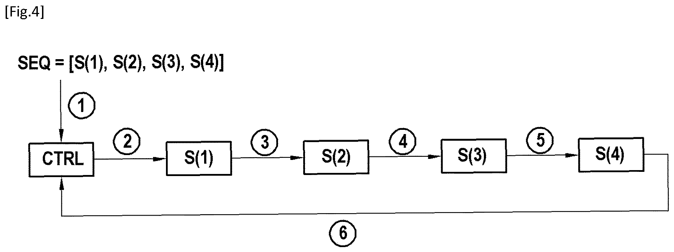

La figure 4 illustre le principe général de l'invention, selon un exemple de mode particulier de mise en œuvre .

Lors d'une première étape ①, le service ORCH d'orchestration transmet, au service CTRL de contrôle, une chaîne de services $SEQ = [S(1),S(2),S(3),S(4)]$ à mettre en oeuvre afin de générer une transaction $T$.

Ce service CTRL de contrôle génère de manière récursive un jeton de routage initial $RT(0)$ comprenant des données de routage de messages entre les services $S(1), S(2), S(3), S(4)$ de la chaîne *SEQ*. Le service CTRL de contrôle génère également un jeton de chaînage initial $CT(0)$ qui sera ensuite traité par les différents services $S(1), S(2), S(3), S(4)$ de la chaîne *SEQ*, de sorte à permettre au service CTRL de contrôle de vérifier le caractère atomique de la transaction.

Ces deux jetons $RT(0)$ et $CT(0)$ sont transmis lors d'une étape ② au premier service $S(1)$ de la chaîne *SEQ*. Ce premier service $S(1)$ vérifie qu'il est bien le destinataire légitime par analyse du jeton de routage $RT(0)$, met en oeuvre une fonction propre audit service $S(1)$, et génère un jeton de chaînage $CT(1)$.

Le service $S(1)$ détermine également le deuxième service $S(2)$ de la chaîne $S$ par analyse du jeton de routage $RT(0)$. Puis, lors d'une étape ③, le service $S(1)$ transmet un jeton de routage $RT(1)$, et le jeton de chaînage $CT(1)$ au service suivant $S(2)$.

Ce deuxième service $S(2)$ vérifie qu'il est bien le destinataire légitime par analyse du jeton de routage $RT(1)$, met en œuvre une fonction propre au service $S(2)$, et génère un jeton de chaînage $CT(2)$.

Le service $S(2)$ détermine également le troisième service $S(3)$ de la chaîne $S$ par analyse du jeton de routage $RT(1)$. Puis, lors d'une étape ④, le service $S(2)$ transmet un jeton de routage $RT(2)$, et le jeton de chaînage $CT(2)$ au service suivant $S(3)$.

De manière relativement similaire, ce troisième service $S(3)$ vérifie qu'il est bien le destinataire légitime par analyse du jeton de routage $RT(2)$, met en oeuvre une fonction propre audit service $S(3)$, et génère un jeton de chaînage $CT(3)$.

Le service $S(3)$ détermine également le quatrième service $S(4)$ de la chaîne $S$ par analyse du jeton de routage $RT(2)$. Puis, lors d'une étape ⑤, le service $S(3)$ transmet un jeton de routage $RT(3)$, et le jeton de chaînage $CT(3)$ au service suivant $S(4)$.

Ce quatrième service $S(4)$ vérifie qu'il est bien le destinataire légitime par analyse du jeton de routage $RT(3)$, met en oeuvre une fonction propre audit service $S(4)$, et génère un jeton de chaînage $CT(4)$.

Le service $S(4)$ détermine également le service suivant, par analyse du jeton de routage $RT(3)$. Ici, il s'agit du service CTRL de contrôle. Lors d'une étape ⑥, le service $S(4)$ transmet alors un jeton de routage $RT(4)$, et le jeton de chaînage $CT(4)$ au service CTRL de contrôle.

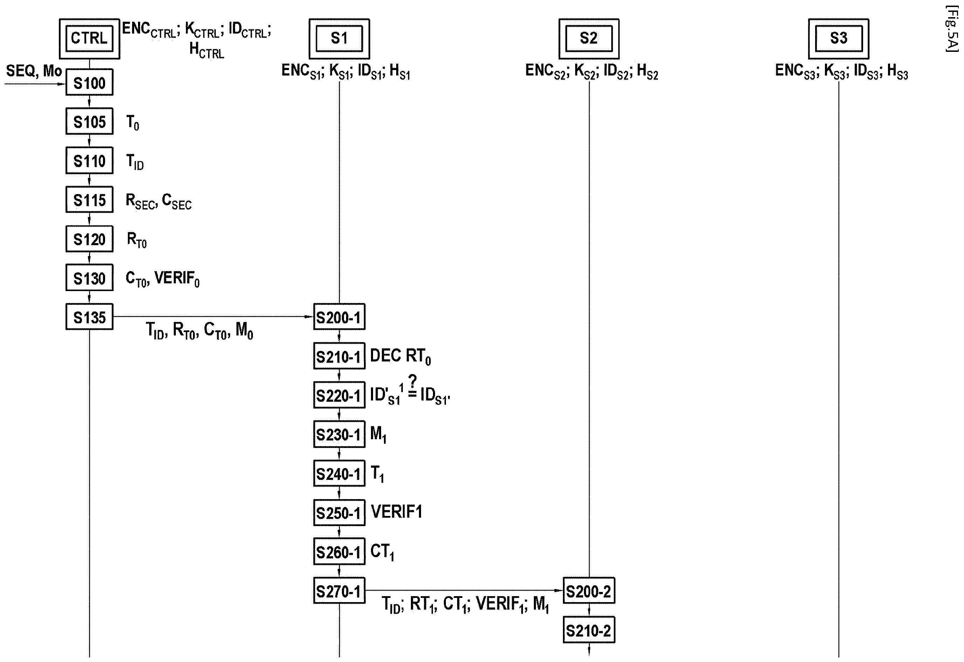

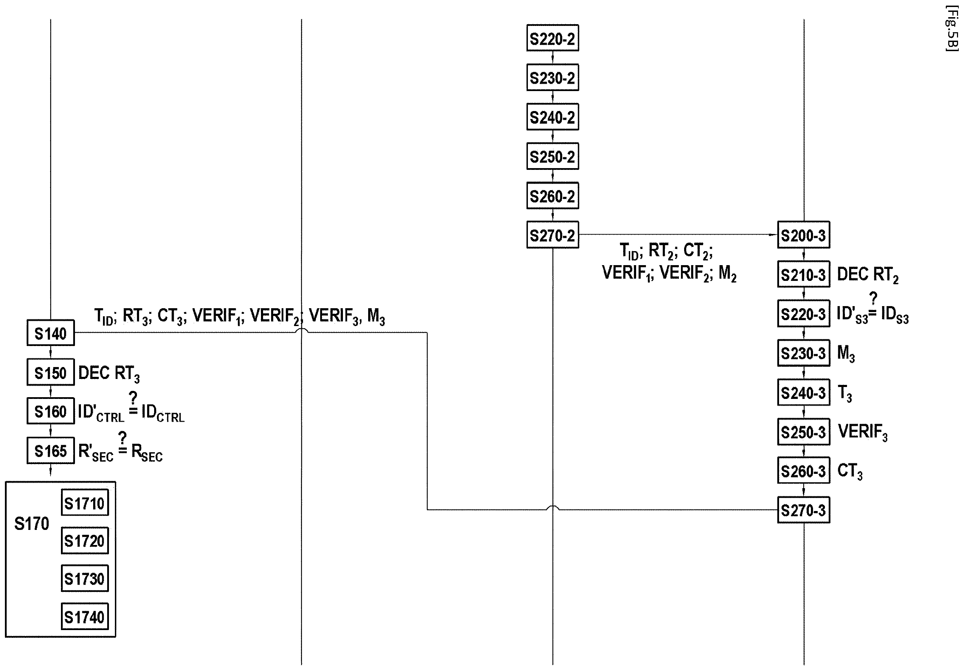

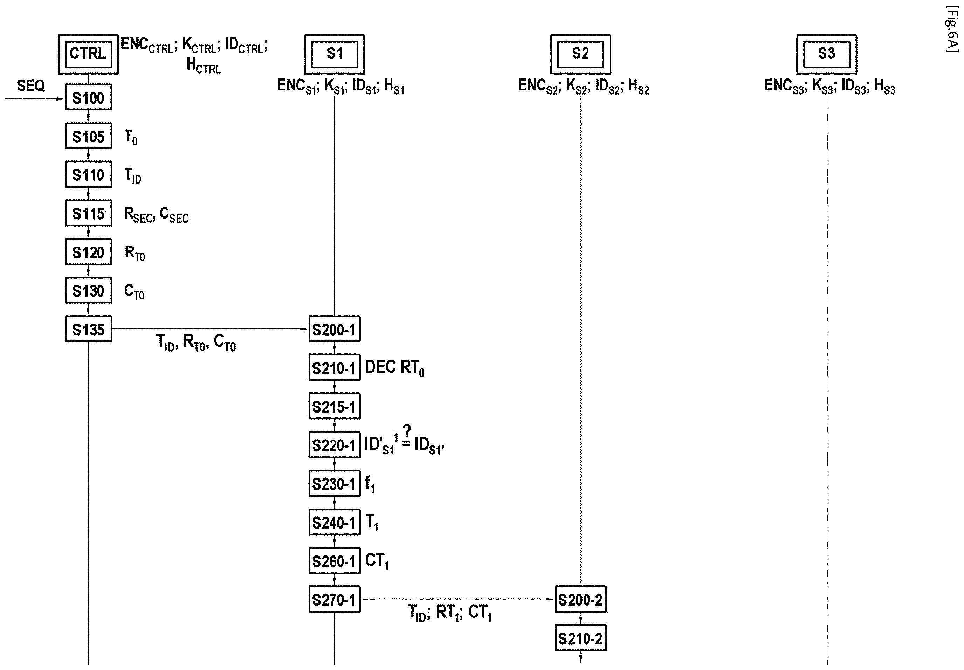

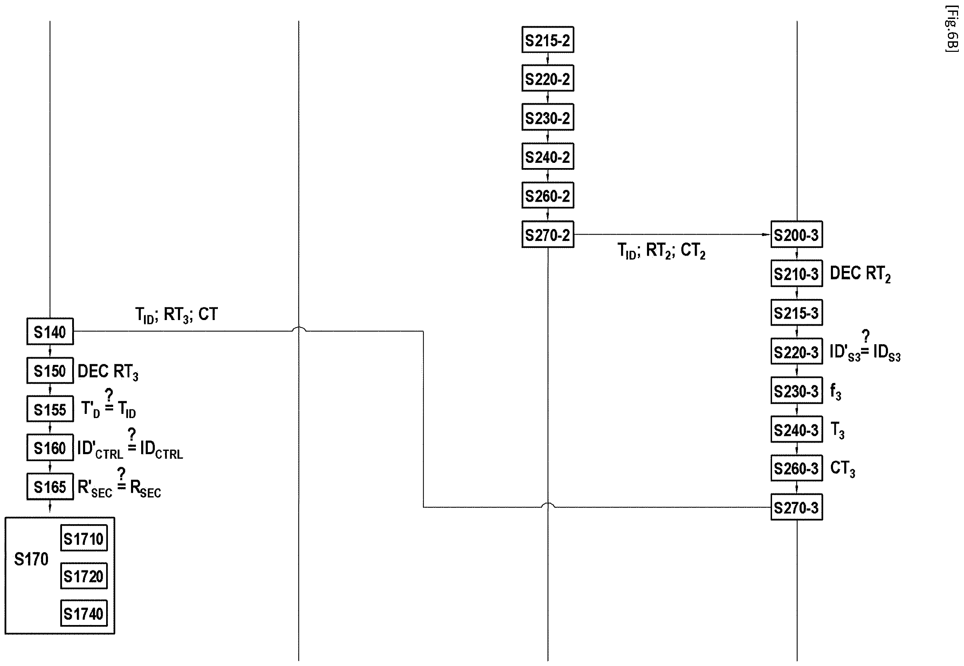

Le service CTRL de contrôle vérifie alors qu'il est bien le destinataire légitime par analyse du jeton de routage $RT(4)$ puis vérifie le caractère atomique de la transaction $T$ en fonction du jeton de chaînage $CT(4)$. Cette étape est décrite plus en détail en référence aux figures 5A, 5B, 6A, 6B.

En d'autres termes, l'invention concerne un procédé de mise en oeuvre d'un service ($S(i)$), dit service courant, d'une chaîne de n services, le procédé comprenant :

- la réception, en provenance du service ($S(i - 1)$) précédent le service courant ($S(i)$) dans la chaîne, d'un premier jeton de routage ($RT(i -1)$) comprenant des données de routage de messages entre les services de la chaîne ;

- la vérification que le service courant est un destinataire légitime du premier jeton de routage ($RT(i - 1)$) ;

- la mise en oeuvre d'une fonction du service courant ;

- la génération d'un jeton de chaînage, dit jeton de chaînage courant ($CT(i)$), comprenant des données de preuve d'un passage par un service courant ($S(i)$) ; et,

- la transmission, à destination du service ($S(i + 1)$) suivant le service courant ($S(i)$) dans la chaîne, du jeton de chaînage courant ($CT(i)$) et d'un deuxième jeton de routage ($RT(i)$) déterminé à partir du premier jeton de routage.

Premier mode de mise en œuvre

La figure 5 comprend la figure 5A et la figure 5B, et représente, sous forme d'ordinogramme, un premier mode particulier de mise en oeuvre d'un procédé général de contrôle d'une transaction résultant du passage par un ensemble de services chaînés tel que proposé, et inclut un procédé de vérification d'une chaîne de services mis en oeuvre par un dispositif $D_{CTRL}$ de vérification, et un procédé de mise en oeuvre d'un service $S(i)$ mis en oeuvre par chacun des dispositifs $D_{S(i)}$.

Le service CTRL de contrôle comprend un algorithme de chiffrement symétrique $ENC_{CTRL}( )$, une clef de chiffrement $K_{CTRL}$, un identifiant $ID_{CTRL}$ et une fonction de hachage $H_{CTRL}$. Ces données sont par exemples stockées dans la mémoire non volatile 4 du dispositif $D_{CTRL}$ de vérification.

Chaque service $S(i)$ comprend également un algorithme de chiffrement symétrique $ENC_{s(i)}( )$, une clef cryptographique $K_{s(i)}$, un identifiant $ID_{s(i)}$ et une fonction de hachage $H_{s(i)}$. Ces données sont par exemples stockées dans la mémoire non volatile 4 de chaque dispositif $D_{s(i)}$ de mise en oeuvre d'un service.

Selon l'invention, un service est identifié par une information discriminante sur un dispositif, et $ID_{s(i)}$ correspond par exemple à :

- une API portée par une URL ;

- une adresse mail ou un identifiant de messagerie ;

- un port IP porté par une adresse IP ;

- un identifiant porté par un système de messagerie ;

- un numéro de port sur d'autres protocoles de connectivité locale associé à une adresse logique suivant ces protocoles de communication ;

- une adresse MAC

- une adresse mémoire ou une interruption au sein d'un équipement électronique.

Selon l'invention, un service $S(i)$ peut également être identifié par son certificat électronique, par exemple conforme à la norme X.509.

Tel qu'illustré par la figure 5, le procédé général de contrôle d'une transaction comprend une première étape S100, de réception d'une chaîne de services $SEQ = [S(1),S(2),S(3)]$, ainsi qu'une donnée $M_0$ sur laquelle les différents services de la chaîne devront appliquer une fonction qui leur est propre, de sorte à générer une transaction $T$.

Lors d'une étape S105, le service CTRL de contrôle génère une estampille temporelle $T_0$. Cette estampille temporelle est particulièrement avantageuse afin d'éviter une attaque par rejeu. En variante, il serait également possible d'utiliser une valeur générée aléatoirement par le service CTRL de contrôle.

Lors d'une étape S110, le service CTRL de contrôle génère un identifiant de transaction $ID_T$, puis une valeur secrète de routage $R_{SEC}$ ainsi qu'une valeur secrète de chaînage $C_{SEC}$ lors d'une étape S115.

Le procédé comprend en outre une étape S120, de génération d'un jeton de routage initial $RT(0)$ de manière récursive à partir d'un jeton de routage $RT(n)$, ou $n$ correspond au nombre de services de la chaîne.

Ainsi, $RT(n)$ est par exemple défini tel que $RT(n) = ENC_{CTRL}(ID_{CTRL} \mid ID_T \mid R_{SEC}, K_{CTRL})$ avec | l'opérateur de concaténation,

et

$$RT(n-1) = ENC_{s(n)}\big(ID_{s(n)} \mid ID_{CTRL} \mid RT(n), K_{s(n)}\big)$$

$$[...] \, RT(i) = ENC_{s(i+1)}\big(ID_{s(i+1)} \mid ID_{S(i+2)} \mid RT(i+1), K_{s(i+1)}\big)$$

$$[...] \, RT(0) = ENC_{s(1)}\big(ID_{s(1)} \mid ID_{S(2)} \mid RT(1), K_{s(1)}\big)$$

Tel qu'illustré par la figure 5, $n = 3$, et donc $RT(0)$ est calculé de la façon suivante :

$$RT(3) = ENC_{CTRL}(ID_{CTRL} \mid ID_T \mid R_{SEC}, k_{CTRL});$$

$$RT(2) = ENC_{s(3)}\big(ID_{s(3)} \mid ID_{CTRL} \mid RT(3), K_{s(3)}\big)$$

$$RT(1) = ENC_{s(2)}\big(ID_{s(2)} \mid ID_{s(3)} \mid RT(2), K_{s(2)}\big)$$

et donc

$$RT(0) = ENC_{s(1)}\big(ID_{s(1)} \mid ID_{s(2)} \mid RT(1), K_{s(1)}\big)$$

Le procédé comprend en outre une étape S130 au cours de laquelle le service CTRL de contrôle génère une première donnée de preuve $verif(0)$ telle que $verif(0) = H_{CTRL}(T_0 | C_{SEC})$ puis calcule un jeton de chaînage $CT(0)$ initial tel que $CT(0) = ENC_{CTRL}(verif(0), K_{CTRL})$. En variante, $verif(0)$ est calculée telle que $verif(0) = H_{CTRL}(M_0 | T_0 | C_{SEC})$.

Puis, lors d'une étape S135, le service CTRL de contrôle transmet l'identifiant de transaction $T_{ID}$, le jeton de routage $RT(0)$, le jeton de chaînage $CT(0)$, ainsi qu'une donnée $M_0$ au premier service $S(1)$ de la chaîne.

Ces données sont ainsi reçues par le premier service $S(1)$ lors d'une étape référencée S200-1. Cette étape est mise en oeuvre par le module MOD_RX du dispositif $D_{S(1)}$ de mise en oeuvre du service $S(1)$.

Lors d'une étape S210-1, le service $S(1)$ déchiffre le jeton de routage $RT(0)$ à l'aide de sa clef de cryptographique $K_{S(1)}$ et obtient alors un premier identifiant $ID'_{S(1)}$, un deuxième identifiant $ID_{S(2)}$ identifiant le service suivant de la chaîne, et le jeton de routage $RT(1)$.

Le procédé comprend en outre une étape S220-1 au cours de laquelle le service $S(1)$ vérifie si l'identifiant $ID'_{S(1)}$ obtenu par déchiffrage du jeton $RT(0)$ correspond à son propre jeton $ID_{S(1)}$. Si tel est le cas, cela signifie que le service $S(1)$ est le destinataire légitime, et l'étape S230-1 est mise en oeuvre. Sinon, de manière optionnelle, le service $S(1)$ transmet un message d'erreur ou de refus de traitement au service de contrôle. En variante, le service $S(1)$ abandonne la transaction ou transmet au service suivant ($S(2)$) un message d'erreur ou de refus de traitement. Cette étape est mise en oeuvre par le module MOD_DEST du dispositif $D_{S(1)}$ de mise en oeuvre du service $S(1)$.

Lors de l'étape S230-1, le service $S(1)$ applique une fonction propre audit service $S(1)$ à la donnée $M_0$, de sorte à générer une donnée $M_1$. Cette étape est mise en oeuvre par le module MOD_CS du dispositif $D_{S(1)}$ de mise en oeuvre du service $S(1)$.

Lors d'une étape S240-1, le service $S(1)$ génère une estampille temporelle $T_1$, ainsi qu'une donnée de preuve $verif(1)$ telle que $verif(1) = H_{S(1)}(T_1 | M_1 | RT(1))$ lors d'une étape S250-1. Le procédé comprend en ouvre une étape S260-1 au cours de laquelle le service $S(1)$ génère un jeton de chaînage $CT(1)$ tel que $CT(1) = ENC_{S(1)}(verif(1), k_{s(1)}) XOR CT(0)$. Cette étape est mise en oeuvre par le module MOD_CT du dispositif $D_{S(1)}$ de mise en oeuvre du service $S(1)$.

De façon plus générale, chaque service $S(i)$ avec $i = 1..n$, $n$ étant le nombre de services de la chaîne $SEQ$, génère une donnée de preuve $verif(i)$ telle que $verif(i) = H_{S(i)}(i | M_i | RT(i))$ ainsi qu'un jeton de chaînage $CT(i)$ tel que $CT(i) = ENC_{S(i)}(verif(i), k_{s(i)}) XOR CT(i-1)$.

Enfin, lors d'une étape S270-1, le service $S(1)$ transmet l'identifiant de transaction $T_{ID}$, le jeton de routage $RT(1)$, le jeton de chaînage $CT(1)$, la donnée de preuve $verif(1)$, ainsi que la donnée $M_1$ au deuxième service $S(2)$ de la chaîne. Cette étape est mise en oeuvre par le module MOD_TX du dispositif $D_{S(1)}$ de mise en oeuvre du service $S(1)$. On rappelle ici que ce deuxième service $S(2)$ avait été identifié par le premier service $S(1)$ au travers de l'identifiant $ID_{s(2)}$ obtenu lors de l'étape S210-1.

Ces données sont reçues par le deuxième service $S(2)$ lors d'une étape référencée S200-2. Cette étape est mise en oeuvre par le module MOD_RX du dispositif $D_{S(2)}$ de mise en oeuvre du service $S(2)$.

Lors d'une étape S210-2, le service $S(2)$ déchiffre le jeton de routage $RT(X)$ à l'aide de sa clef de cryptographique $K_{S(2)}$ et obtient alors un premier identifiant $ID'_{s(2)}$, un deuxième identifiant $ID_{s(3)}$ identifiant le service suivant de la chaîne, et le jeton de routage $RT(2)$.

Le procédé comprend en outre une étape S220-2 au cours de laquelle le service $S(2)$ vérifie si l'identifiant $ID'_{s(1)}$ obtenu par déchiffrage du jeton $RT(1)$ correspond à son propre jeton $ID_{s(2)}$. Si tel est le cas, cela signifie que le service $S(2)$ est le destinataire légitime, et l'étape S230-2 est mise en oeuvre. Sinon, le service $S(2)$ transmet un message au service CTRL de contrôle l'informant qu'il n'est pas le destinataire légitime. Cette étape est mise en oeuvre par le module MOD_DEST du dispositif $D_{S(2)}$ de mise en œuvre du service $S(2)$.

Lors de l'étape S230-2, le service $S(2)$ applique une fonction propre audit service $S(2)$ à la donnée $M_1$, de sorte à générer une donnée $M_2$. Cette étape est mise en oeuvre par le module MOD_CS du dispositif $D_{S(2)}$ de mise en oeuvre du service $S(2)$.

Lors d'une étape S240-1, le service $S(2)$ génère une estampille temporelle $T_2$, ainsi qu'une donnée de preuve $verif(2)$ telle que $verif(2) = H_{S(2)}(T_2 | M_2 | RT(2))$ lors d'une étape S250-2. Le procédé comprend en ouvre une étape S260-2 au cours de laquelle le service $S(2)$ génère un jeton de chaînage $CT(2)$ tel que $CT(2) = ENC_{S(2)}(verif(2), k_{s(2)}) XOR CT(1)$. Cette étape est mise en oeuvre par le module MOD_CT du dispositif $D_{S(2)}$ de mise en oeuvre du service $S(2)$.

Enfin, lors d'une étape S270-2, le service $S(2)$ transmet l'identifiant de transaction $T_{ID}$, le jeton de routage $RT(2)$, le jeton de chaînage $CT(2)$, les données de preuve $verif(1)$ et $verif(2)$, ainsi que la donnée $M_2$ au troisième service $S(3)$ de la chaîne. Cette étape est mise en oeuvre par le module MOD_TX du dispositif $D_{S(3)}$ de mise en oeuvre du service $S(3)$.

Ces données sont reçues par le troisième service $S(3)$ lors d'une étape référencée S200-3. Cette étape est mise en oeuvre par le module MOD_RX du dispositif $D_{S(3)}$ de mise en oeuvre du service $S(3)$.

Lors d'une étape S210-3, le service $S(3)$ déchiffre le jeton de routage $RT(2)$ à l'aide de sa clef de cryptographique $K_{S(3)}$ et obtient alors un premier identifiant $ID'_{s(3)}$, un deuxième identifiant $ID_{CTRL}$ identifiant le service suivant de la chaîne, et le jeton de routage $RT(3)$.

Le procédé comprend en outre une étape S220-3 au cours de laquelle le service $S(3)$ vérifie si l'identifiant

$ID'_{s(3)}$ obtenu par déchiffrage du jeton $RT(2)$ correspond à son propre jeton $ID_{s(3)}$. Si tel est le cas, cela signifie que le service $S(3)$ est le destinataire légitime, et l'étape S230-3 est mise en œuvre. Sinon, le service $S(3)$ transmet un message au service CTRL de contrôle l'informant qu'il n'est pas le destinataire légitime. Cette étape S220-3 est mise en oeuvre par le module MOD_DEST du dispositif $D_{S(3)}$ de mise en œuvre du service $S(3)$.

Lors de l'étape S230-3, le service $S(3)$ applique une fonction propre audit service $S(3)$ à la donnée $M_2$, de sorte à générer une donnée $M_3$. Cette étape est mise en oeuvre par le module MOD_CS du dispositif $D_{S(3)}$ de mise en œuvre du service S(3).

Lors d'une étape S240-3, le service $S(3)$ génère une estampille temporelle $T_3$, ainsi qu'une donnée de preuve $verif(3)$ telle que $verif(3)= H_{S(3)}(T_3|M_3|RT(3))$ lors d'une étape S250-3. Le procédé comprend en ouvre une étape S260-3 au cours de laquelle le service $S(3)$ génère un jeton de chaînage $CT(3)$ tel que $CT(3) = ENC_{S(3)}(verif(3),k_{s(3)})$ $XOR$ $CT(2)$. Cette étape est mise en oeuvre par le module MOD_CT du dispositif $D_{S(3)}$ de mise en œuvre du service $S(3)$.

Enfin, lors d'une étape S270-3, le service $S(3)$ transmet l'identifiant de transaction $T_{ID}$, le jeton de routage $RT(3)$, le jeton de chaînage $CT(3)$, les données de preuve $verif(1)$, $verif(2)$, et $verif(3)$, ainsi que la donnée $M_3$ au service CTRL de contrôle. Cette étape S270-3 est mise en oeuvre par le module MOD_TX du dispositif $D_{S(3)}$ de mise en œuvre du service $S(3)$.

Ces données sont reçues par le service CTRL de contrôle lors d'une étape référencée S140. Cette étape S140 est mise en oeuvre par le module MOD_RX du dispositif $D_{CTRL}$ de vérification d'une chaîne de services.

Lors d'une étape S150, le service CTRL de contrôle déchiffre le jeton de routage $RT(3)$ à l'aide de sa clef cryptographique $K_{CTRL}$ et obtient alors un premier identifiant $ID'_{CTRL}$, un deuxième identifiant $ID_T$ identifiant une transaction, et une valeur secrète de routage $R'_{SEC}$.

Le procédé comprend en outre une étape S160 au cours de laquelle le service CTRL de contrôle vérifie si l'identifiant $ID'_{CTRL}$ obtenu par déchiffrage du jeton $RT(3)$ correspond à son propre jeton $ID_{CTRL}$. Si tel est le cas, cela signifie que le service CTRL est le destinataire légitime, et l'étape S165 est mise en oeuvre. Cette étape est mise en oeuvre par le module MOD_DEST du dispositif $D_{CTRL}$ de vérification d'une chaîne de services.

Lors de l'étape S165, le service CTRL de contrôle vérifie si la valeur secrète de routage $R'_{SEC}$ est égale à la valeur secrète de routage $R_{SEC}$ générée lors de l'étape S115. Si tel est le cas, cela permet au service de contrôle de s'assurer que le jeton de routage RT(n) reçu est issu d'un traitement, par différents services, d'un jeton de routage que ce service de contrôle avait initialement généré.

Le procédé comprend en outre une étape S170 au cours de laquelle le service CTRL de contrôle vérifie le passage par les n services de la chaîne, par traitement du jeton de chaînage $CT(n)$ et des n données de preuve. Cette étape est mise en oeuvre par le module MOD_PROC du dispositif $D_{CTRL}$ de vérification d'une chaîne de services.

Cette étape S170 comprend une première sous-étape S1710 au cours de laquelle le service CTRL calcule de façon itérative le jeton $CT_{VALID}(i)$ tel que $CT'(i - 1) = ENC_{S(i)}(verif(i),K_{s(i)})$ $XOR$ $CT(i)$ pour $i = n..1$.

Autrement dit, pour l'exemple illustré par la figure 5, le service CTRL de contrôle calcule $CT'(0)$ tel que

$$CT'(2) = ENC\left(verif(3),K_{s(3)}\right) XOR\ CT(3)$$

$$CT'(1) = ENC\left(verif(2),K_{s(2)}\right) XOR\ CT'(2)$$

$$CT'(0) = ENC\left(verif(1),K_{s(1)}\right) XOR\ CT'(1)$$

Lors d'une sous-étape S1720, le service CTRL de contrôle obtient la valeur $verif(0)$ utilisée lors de l'étape S130, par exemple en accédant la mémoire non volatile 4 du dispositif $D_{CTRL}$ de contrôle. Puis, lors de l'étape S1730, le service CTRL recalcule le jeton de chaînage $CT(0)$ initial tel que $CT(0) = ENC_{CTRL}(verif(0),K_{CTRL})$, comme lors de l'étape S130. Enfin, lors d'une sous-étape S1740, le service CTRL vérifie si les valeurs $CT'(0)$ et $CT(0)$ sont égales. Si tel est le cas, cela signifie que la transaction T est une transaction atomique, et que la donnée $M_0$ a effectivement transité entre chacun des services de la séquence dans l'ordre défini par cette séquence.

Variante au premier mode de mise en œuvre (« configuration centralisée »)

Le premier mode de mise en oeuvre illustré par la figure 5 a été décrit dans le cas où un service courant s(i) :

- reçoit une donnée verif(i-1) de preuve qu'une donnée a effectivement transitée par le service précédent s(i-1) ;

- génère une donnée verif(i) de preuve qu'une donnée a effectivement transitée par ledit service courant ; et,

- transmet les données verif(i-1) et verif(i) à destination du service suivant.

Cependant, l'invention n'en reste pas moins applicable lorsque, pour chaque service s(i), ladite donnée verif(i) de preuve est directement transmise au service CTRL de contrôle.

Deuxième mode de mise en œuvre

La figure 6 comprend la figure 6A et la figure 6B, et représente, sous forme d'ordinogramme, un deuxième mode particulier de mise en oeuvre d'un procédé général de contrôle d'une transaction résultant de l'application d'un ensemble de services chaînés tel que proposé, et inclut un procédé de vérification d'une chaîne de services mis en oeuvre par un dispositif $D_{CTRL}$ de vérification, et un procédé de mise en oeuvre d'un service $S(i)$ mis en oeuvre par des dispositifs $D_{S(i)}$.

Le service CTRL de contrôle comprend un algorithme de chiffrement $ENC_{CTRL}(\ )$ et de déchiffrement $DENC_{CTRL}(\ )$, une clef cryptographique $K_{CTRL}$, un identifiant $ID_{CTRL}$ et une fonction de hachage $H_{CTRL}$. Ces données sont par exemples stockées dans la mémoire non volatile 4 du dispositif $D_{CTRL}$ de vérification.

Chaque service $S(i)$ comprend également un algorithme de chiffrement symétrique $ENC_{s(i)}(\ )$, une clef cryptographique $K_{s(i)}$, un identifiant $ID_{s(i)}$ et une fonction de hachage $H_{s(i)}$. Ces données sont par exemples stockées dans la mémoire non volatile 4 de chaque dispositif $D_{S(i)}$ de mise en oeuvre d'un service.

Tel qu'illustré par la figure 6, le procédé général de contrôle d'une transaction comprend une première étape S100, de réception d'une chaîne de services $SEQ = [S(1),S(2),S(3)]$.

Lors d'une étape S105, le service CTRL de contrôle génère une estampille temporelle $T_0$. Cette estampille temporelle est particulièrement avantageuse afin d'éviter une attaque par rejeu. En variante, il serait également possible d'utiliser une valeur générée aléatoirement par le service CTRL de contrôle.

Lors d'une étape S110, le service CTRL de contrôle génère un identifiant de transaction $ID_T$, puis une valeur secrète de routage $R_{SEC}$ ainsi qu'une valeur secrète de chaînage $C_{SEC}$ lors d'une étape S115.

Le procédé comprend en outre une étape S120, de génération d'un jeton de routage initial $RT(0)$ de manière récursive à partir d'un jeton de routage $RT(n)$, ou n correspond au nombre de services de la chaîne.

Ainsi, $RT(n)$ est par exemple défini tel que $RT(n) = ENC_{CTRL}(ID_{CTRL}|ID_T|R_{SEC},K_{CTRL})$ avec | l'opérateur de concaténation, et

$$RT(n-1) = ENC_{s(n)}\big(ID_{s(n-1)}\,\big|\,ID_{s(n)}\,\big|\,ID_{CTRL}\,\big|\,RT(n),K_{s(n)}\big)$$

$$[...]\,RT(i) = ENC_{s(i+1)}\big(ID_{s(i)}\,\big|\,ID_{s(i+1)}\,\big|\,ID_{S(i+2)}\,\big|\,RT(i+1),K_{s(i+1)}\big)$$

$$[...]\,RT(0) = ENC_{s(1)}\big(ID_{CTRL}\,\big|\,ID_{s(1)}\,\big|\,ID_{S(2)}\,\big|\,RT(1),K_{s(1)}\big)$$

Le procédé comprend en outre une étape S130 au cours de laquelle le service CTRL de contrôle calcule un jeton de chaînage $CT(0)$ initial tel que

$$CT(0) = ENC_{CTRL}\big(C_{SEC}\,\big|\,T_0\,\big|\,HMAC(RT(0),K_{CTRL}),K_{CTRL}\big)$$

avec $HMAC(\ )$ une fonction cryptographique qui combine la fonction de hachage $H_{CTRL}$ avec la clé secrète $K_{CTRL}$.

Puis, lors d'une étape S135, le service CTRL de contrôle transmet l'identifiant de transaction $T_{ID}$, le jeton de routage $RT(0)$, le jeton de chaînage $CT(0)$ au premier service $S(1)$ de la chaîne.

Ces données sont ainsi reçues par le premier service $S(1)$ lors d'une étape référencée S200-1. Cette étape est mise en oeuvre par le module MOD_RX du dispositif $D_{S(1)}$ de mise en oeuvre du service $S(1)$.

Lors d'une étape S210-1, le service $S(1)$ déchiffre le jeton de routage $RT(0)$ à l'aide de sa clef de cryptographique $K_{S(1)}$ et obtient alors un premier identifiant $ID'_{CTRL}$, un deuxième identifiant $ID'_{S(1)}$, un troisième identifiant $ID_{S(2)}$ identifiant le service suivant de la chaîne, et le jeton de routage $RT(1)$.

Le procédé comprend alors une étape S215-1 au cours de laquelle le service $S(1)$ vérifie si l'identifiant $ID'_{CTRL}$ obtenu par déchiffrage du jeton $RT(0)$ provient d'une source légitime. Cette étape est par exemple mise en oeuvre en comparant l'identifiant $ID'_{CTRL}$ avec l'identifiant d'émetteur de la trame Ethernet émise lors de l'étape S135.

Le procédé comprend en outre une étape S220-1 au cours de laquelle le service $S(1)$ vérifie si l'identifiant $ID'_{S(1)}$ obtenu par déchiffrage du jeton $RT(0)$ correspond à son propre jeton $ID_{S(1)}$. Si tel est le cas, cela signifie que le service $S(1)$ est le destinataire légitime, et l'étape S230-1 est mise en oeuvre. Sinon, le service $S(1)$ transmet un message au service de contrôle l'informant qu'il n'est pas le destinataire légitime. Cette étape est mise en oeuvre par le module MOD_DEST du dispositif $D_{S(1)}$ de mise en oeuvre du service $S(1)$.

Lors de l'étape S230-1, le service $S(1)$ applique une fonction $f(1)$ propre audit service $S(1)$. Cette étape est mise en oeuvre par le module MOD_CS du dispositif $D_{S(1)}$ de mise en oeuvre du service $S(1)$.

Lors d'une étape S240-1, le service $S(1)$ génère une estampille temporelle $T_1$. Le procédé comprend en ouvre une étape S260-1 au cours de laquelle le service $S(1)$ génère un jeton de chaînage $CT(1)$ tel que

$$CT(1) = ENC_{S(1)}\big(CT(0) \mid T_1 \mid HMAC(RT(1), K_{S(1)}), K_{S(1)}\big)$$

avec $HMAC(\ )$ une fonction cryptographique qui combine la fonction de hachage $H_{S(1)}$ avec la clé secrète $K_{S(1)}$.

Cette étape est mise en oeuvre par le module MOD_CT du dispositif $D_{S(1)}$ de mise en oeuvre du service $S(1)$.

De façon plus générale, chaque service $S(i)$ avec $i = 1.. n$, $n$ étant le nombre de services de la chaîne SEQ, génère un jeton de chaînage $CT(i)$ tel que

$$CT(i) = ENC_{S(i)}\big(CT(i-1) \mid T_i \mid HMAC_{S(i)}(RT(i), K_{S(i)}), K_{S(i)}\big)$$

avec $HMAC_{S(i)}(\ )$ une fonction cryptographique du service $S(i)$ et qui combine la fonction de hachage $H_{S(i)}$ avec la clé secrète $K_{S(i)}$.

Enfin, lors d'une étape S270-1, le service $S(1)$ transmet l'identifiant de transaction $T_{ID}$, le jeton de routage $RT(1)$, le jeton de chaînage $CT(1)$ au deuxième service $S(2)$ de la chaîne. Cette étape est mise en oeuvre par le module MOD_TX du dispositif $D_{S(1)}$ de mise en oeuvre du service $S(1)$. On rappelle ici que ce deuxième service $S(2)$ avait été identifié par le premier service $S(1)$ au travers de l'identifiant $ID_{S(2)}$ obtenu lors de l'étape S210-1.

Ces données sont reçues par le deuxième service $S(2)$ lors d'une étape référencée S200-2. Cette étape est mise en oeuvre par le module MOD_RX du dispositif $D_{S(2)}$ de mise en oeuvre du service $S(2)$.

Lors d'une étape S210-2, le service $S(2)$ déchiffre le jeton de routage $RT(1)$ à l'aide de sa clef de cryptographique $K_{S(2)}$ et obtient alors un premier identifiant $ID'_{s(1)}$, un deuxième identifiant $ID_{s(2)}$, un troisième identifiant $ID_{s(3)}$ identifiant le service suivant de la chaîne, et le jeton de routage $RT(2)$.

Le procédé comprend alors une étape S215-2 au cours de laquelle le service $S(2)$ vérifie si l'identifiant $ID'_{S(1)}$ obtenu par déchiffrage du jeton $RT(1)$ provient d'une source légitime, et ce, de manière similaire à l'étape S215-1.

Le procédé comprend également une étape S220-2 au cours de laquelle le service $S(2)$ vérifie si l'identifiant $ID'_{s(2)}$ obtenu par déchiffrage du jeton $RT(1)$ correspond à son propre jeton $ID_{s(2)}$. Si tel est le cas, cela signifie que le service $S(2)$ est le destinataire légitime, et l'étape S230-2 est mise en oeuvre. Sinon, le service $S(2)$ transmet un message au service CTRL de contrôle l'informant qu'il n'est pas le destinataire légitime. Cette étape est mise en oeuvre par le module MOD_DEST du dispositif $D_{S(2)}$ de mise en oeuvre du service $S(2)$.

Lors de l'étape S230-2, le service $S(2)$ applique une fonction $f(2)$ propre audit service $S(2)$. Cette étape est mise en oeuvre par le module MOD_CS du dispositif $D_{S(2)}$ de mise en oeuvre du service $S(2)$.

Lors d'une étape S240-1, le service $S(2)$ génère une estampille temporelle $T_2$. Le procédé comprend en ouvre une étape S260-2 au cours de laquelle le service $S(2)$ génère un jeton de chaînage $CT(2)$ tel que

$$CT(2) = ENC_{S(2)}\big(CT(1) \mid T_2 \mid HMAC(RT(2), K_{S(2)}), K_{S(2)}\big)$$

avec $HMAC(\ )$ une fonction cryptographique qui combine la fonction de hachage $H_{S(2)}$ avec la clé secrète $K_{S(2)}$.

Cette étape est mise en oeuvre par le module MOD_CT du dispositif $D_{S(2)}$ de mise en oeuvre du service $S(2)$.

Enfin, lors d'une étape S270-2, le service $S(2)$ transmet l'identifiant de transaction $T_{ID}$, le jeton de routage $RT(2)$, le jeton de chaînage CT(2) au troisième service $S(3)$ de la chaîne. Cette étape est mise en oeuvre par le module MOD_TX du dispositif $D_{S(3)}$ de mise en oeuvre du service $S(3)$.

Ces données sont reçues par le troisième service $S(3)$ lors d'une étape référencée S200-3. Cette étape est mise en oeuvre par le module MOD_RX du dispositif $D_{S(3)}$ de mise en oeuvre du service $S(3)$.

Lors d'une étape S210-3, le service $S(3)$ déchiffre le jeton de routage $RT(2)$ à l'aide de sa clef de cryptographique $K_{S(3)}$ et obtient alors un premier identifiant $ID'_{s(2)}$, un deuxième identifiant $ID'_{s(3)}$ et un troisième identifiant $ID_{CTRL}$ identifiant le service suivant de la chaîne, et le jeton de routage $RT(3)$.

Le procédé comprend alors une étape S215-3 au cours de laquelle le service $S(3)$ vérifie si l'identifiant $ID'_{S(2)}$ obtenu par déchiffrage du jeton $RT(2)$ provient d'une source légitime, et ce, de manière similaire à l'étape S215-1.

Le procédé comprend alors une étape S220-3 au cours de laquelle le service $S(3)$ vérifie si l'identifiant $ID'_{s(3)}$

obtenu par déchiffrage du jeton $RT(2)$ correspond à son propre jeton $ID_{S(3)}$. Si tel est le cas, cela signifie que le service $S(3)$ est le destinataire légitime, et l'étape S230-3 est mise en oeuvre. Sinon, le service $S(3)$ transmet un message au service CTRL de contrôle l'informant qu'il n'est pas le destinataire légitime. Cette étape S220-3 est mise en oeuvre par le module MOD_DEST du dispositif $D_{S(3)}$ de mise en oeuvre du service $S(3)$.

Lors de l'étape S230-3, le service $S(3)$ applique une fonction $f(3)$ propre audit service $S(3)$. Cette étape est mise en oeuvre par le module MOD_CS du dispositif $D_{S(3)}$ de mise en oeuvre du service $S(3)$.

Lors d'une étape S240-3, le service $S(3)$ génère une estampille temporelle $T_3$. Le procédé comprend en ouvre une étape S260-3 au cours de laquelle le service $S(3)$ génère un jeton de chaînage $CT(3)$ tel que

$$CT(3) = ENC_{S(3)}\big(CT(2) \,|\, T_3 \,|HMAC(RT(3), K_{S(3)}), K_{S(3)}\big)$$

avec $HMAC(\,)$ une fonction cryptographique qui combine la fonction de hachage $H_{S(3)}$ avec la clé secrète $K_{S(3)}$.

Cette étape est mise en oeuvre par le module MOD_CT du dispositif $D_{S(3)}$ de mise en oeuvre du service $S(3)$.

Enfin, lors d'une étape S270-3, le service $S(3)$ transmet l'identifiant de transaction $T_{ID}$, le jeton de routage $RT(3)$ et le jeton de chaînage $CT(3)$ au service CTRL de contrôle. Cette étape S270-3 est mise en oeuvre par le module MOD_TX du dispositif $D_{S(3)}$ de mise en oeuvre du service $S(3)$.

Ces données sont reçues par le service CTRL de contrôle lors d'une étape référencée S140. Cette étape S140 est mise en oeuvre par le module MOD_RX du dispositif $D_{CTRL}$ de vérification d'une chaîne de services.

Lors d'une étape S150, le service CTRL de contrôle déchiffre le jeton de routage $RT(3)$ à l'aide de sa clef cryptographique $K_{CTRL}$ et obtient alors un premier identifiant $ID'_{CTRL}$, un deuxième identifiant $ID_T$ identifiant une transaction, et une valeur secrète de routage $R'_{SEC}$.

Lors d'une étape S155, le service CTRL de contrôle vérifie si l'identifiant $ID'_T$ obtenu par déchiffrage du jeton $RT(3)$ correspond à l'identifiant de transaction généré à l'étape S110. Si tel est le cas, l'étape S160 est mise en oeuvre.

Au cours de l'étape S160, le service CTRL de contrôle vérifie si l'identifiant $ID'_{CTRL}$ obtenu par déchiffrage du jeton $RT(3)$ correspond à son propre jeton $ID_{CTRL}$. Si tel est le cas, cela signifie que le service CTRL est le destinataire légitime, et l'étape S165 est mise en oeuvre. Cette étape est mise en oeuvre par le module MOD_DEST du dispositif $D_{CTRL}$ de vérification d'une chaîne de services.

Lors de l'étape S165, le service CTRL de contrôle vérifie si la valeur secrète de routage $R'_{SEC}$ est égale à la valeur secrète de routage $R_{SEC}$ générée lors de l'étape S115. Si tel est le cas, cela permet au service de contrôle de s'assurer que le jeton de routage $RT(n)$ reçu est issu d'un traitement, par différents services, d'un jeton de routage que ce service de contrôle avait initialement généré.

Le procédé comprend en outre une étape S170 au cours de laquelle le service CTRL de contrôle vérifie le passage par les n services de la chaîne, par traitement du jeton de chaînage $CT(n)$. Cette étape est mise en oeuvre par le module MOD_PROC du dispositif $D_{CTRL}$ de vérification d'une chaîne de services.

Cette étape S170 comprend une première sous-étape S1710 au cours de laquelle le service CTRL calcule de façon itérative le jeton $CT_{VALID}(i)$ tel que

$$CT_{VALID}(i) = DENC_{S(i)}\big(CT(i-1) \,|\, T_i \,|HMAC(RT(i), K_{S(i)}), K_{S(i)}\big) \text{ pour } i = n..1$$

et

$$CT_{VALID}(0) = DENC_{CTRL}\big(C_{SEC} \,|\, T_0 \,|HMAC_{CTRL}(RT(0), K_{CTRL}), K_{CTRL}\big)$$

avec $DENC_{S(i)}(\,)$ une fonction de déchiffrement associée au service $S(i)$ pour $i = n..1$ et $DENC_{CTRL}$ une fonction de déchiffrement associée au service de contrôle (pour $i = 0$).

Le service CTRL de contrôle est initialement provisionné avec les fonctions de déchiffrement associée aux services $S(i)$. Par ailleurs, les estampilles temporelles $T_i$ sont par exemple reçues par le service CTRL de contrôle au travers de messages émis par les différents services de la chaîne.

Dans un mode particulier de mise en oeuvre, le service CTRL de contrôle vérifie la cohérence de tous les paramètres collectés et en particulier la cohérence temporelle des estampilles temporelles $T_i$.

Lors d'une sous-étape S1720, le service CTRL de contrôle obtient la valeur $CT(0)$ générée lors de l'étape S130, par exemple en accédant la mémoire non volatile 4 du dispositif $D_{CTRL}$ de contrôle. Enfin, lors d'une sous-étape S1740, le service CTRL vérifie si les valeurs $CT_{VALID}(0)$ et $CT(0)$ sont égales. Si tel est le cas, cela signifie que la transaction T est une transaction atomique.

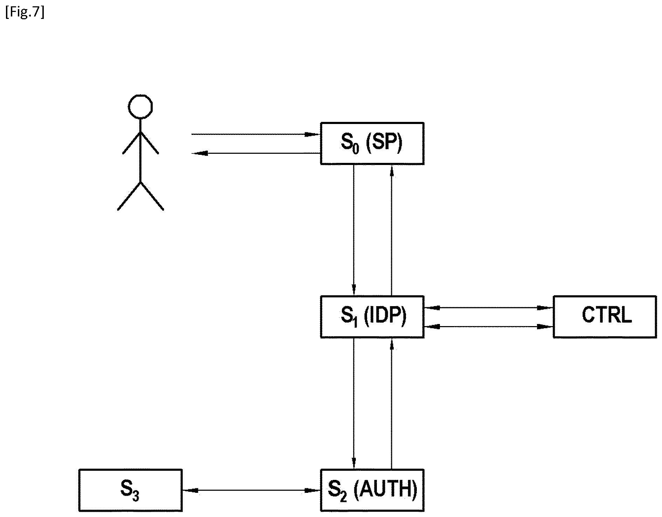

La figure 7 représente un exemple de mise en oeuvre de l'invention, conforme au deuxième mode particulier de mise en oeuvre illustré par la figure 6, dans le cadre d'une transaction de type « Mobile Connect ».

Un contrôleur CTRL est provisionné avec une chaîne de services $SEQ = [S(1),S(2),S(3),S(2),S(1)]$, les identifiants $ID_{CTRL}$, $ID_{S(1)}$, $ID_{S(2)}$, $ID_{S(2)}$, les clefs de chiffrement du contrôleur et des services $K_{CTRL}, K_{s(1)}, K_{s(2)}, K_{s(3)}$. $T_n$ correspond à une estampille temporelle, et $M_n$ à un message initial de la séquence.

$S(0)$ correspond à un service de fourniture de service (« Service Provider » selon la terminologie anglo-saxonne), $S(1)$ à un service de fourniture d'identité (« Identity Provider » selon la terminologie anglo-saxonne), $S(2)$ à un service mettant en oeuvre, au niveau d'un serveur, le protocole « Extensible Authentication Protocol » en utilisant un Universal Subscriber Identity Module (USIM), par exemple la carte SIM d'un téléphone portable de l'utilisateur, et $S(3)$ à un service mettant en oeuvre, au niveau du téléphone portable de l'utilisateur, le protocole « Extensible Authentication Protocol ».

Le service $S(0)$ requête une identification/authentification sur la chaîne de services $SEQ = [S(1),S(2),S(3),S(2),S(1)]$ au service $S(1)$.

Le service $S(1)$ sollicite alors le service CTRL de contrôle qui génère une estampille temporelle $T_0$, un identifiant de transaction $ID_T$, puis une valeur secrète de routage $R_{SEC}$ ainsi qu'une valeur secrète de chaînage $C_{SEC}$.

Le service CTRL de contrôle calcule alors les jetons de routage suivants :

$$RT(5) = ENC_{CTRL}(ID_{CTRL} \mid ID_T \mid R_{SEC}, K_{CTRL})$$

$$RT(4) = ENC_{s(1)}(ID_{s(2)} \mid ID_{s(1)} \mid ID_{CTRL} \mid RT(5), K_{s(1)})$$

$$RT(3) = ENC_{s(2)}(ID_{s(3)} \mid ID_{s(2)} \mid ID_{s(1)} \mid RT(4), K_{s(2)})$$

$$RT(2) = ENC_{s(3)}(ID_{s(2)} \mid ID_{s(3)} \mid ID_{s(2)} \mid RT(3), K_{s(3)})$$

$$RT(1) = ENC_{s(2)}(ID_{s(1)} \mid ID_{s(2)} \mid ID_{s(3)} \mid RT(2), K_{s(2)})$$

$$RT(0) = ENC_{s(1)}(ID_{CTRL} \mid ID_{s(1)} \mid ID_{s(2)} \mid RT(1), K_{s(1)})$$

Le service CTRL de contrôle calcule alors le premier jeton de chaînage CT(0) tel que

$$CT(0) = ENC_{CTRL}(C_{SEC} \mid T_0 \mid HMAC_{CTRL}(RT(0), K_{CTRL}), K_{CTRL})$$

Le service CTRL de contrôle sauvegarde ensuite les données suivantes afin de pour effectuer les vérifications nécessaires en bout de chaîne : $ID_T$, $ID_{CTRL}$, $R_{SEC}$, $C_{SEC}$, $T_0$, $RT(0)$, $RT(1)$, $RT(2)$, $RT(3)$, $RT(4)$ et $RT(5)$.

Le service CTRL de contrôle transmet les données suivantes au premier service $S(1)$ de la chaîne : $ID_T$, $RT(0)$, $CT(0)$. Ce premier service $S(1)$ déchiffre le jeton $RT(0)$ avec $K_{S(1)}$ et obtient $ID_{CTRL}$, $ID_{S(1)}, ID_{S(2)}$, $RT(1)$.

Ce premier service $S(1)$ déchiffre vérifier l'identité de l'émetteur (e.g., le service CTRL de contrôle), son identité, identifie le prochain service $S(2)$ et accède à $RT(1)$, valeur du jeton de routage à transmettre à $S(2)$. Par ailleurs, $S(1)$ génère une estampille temporelle $T_1$ puis calcule $CT(1)$ tel que

$$CT(1) = ENC_{S(1)}(CT(0) \mid T_1 \mid HMAC_{S(1)}(RT(1), K_{S(1)}), K_{S(1)})$$

Puis le service $S(1)$ transmet les données suivantes au service $S(2)$ : $ID_T, RT(1), CT(1)$.

Ce deuxième service $S(2)$ déchiffre le jeton $RT(1)$ avec $K_{S(2)}$ et obtient $ID_{S(1)}$, $ID_{S(2)}, ID_{S(3)}$, $RT(2)$.

Ce deuxième service $S(2)$ vérifie l'identité de l'émetteur (e.g., $S(1)$), son identité, identifie le prochain service $S(3)$ et accède à $RT(2)$, valeur du jeton de routage à transmettre à $S(3)$. Par ailleurs, $S(2)$ génère une estampille temporelle $T_2$ puis calcule $CT(2)$ tel que

$$CT(2) = ENC_{S(2)}(CT(1) \mid T_2 \mid HMAC_{S(2)}(RT(2), K_{S(2)}), K_{S(2)})$$

Puis le service $S(2)$ transmet les données suivantes au service $S(3)$ : $ID_T$, $RT(2)$, $CT(2)$.

Ce troisième service $S(3)$ déchiffre le jeton $RT(2)$ avec $K_{S(3)}$ et obtient $ID_{S(2)}$, $ID_{S(3)}$, $ID_{S(2)}$, $RT(3)$.

Ce troisième service $S(3)$ vérifie l'identité de l'émetteur (e.g., $S(2)$), son identité, identifie le prochain service $S(2)$ et accède à $RT(3)$, valeur du jeton de routage à transmettre à $S(2)$. Par ailleurs, $S(3)$ génère une estampille temporelle $T_3$ puis calcule $CT(3)$ tel que

$$CT(3) = ENC_{S(3)}\big(CT(2) \,|\, T_3 \,|HMAC_{S(3)}(RT(3), K_{S(3)}), K_{S(3)}\big)$$

Puis le service $S(3)$ transmet les données suivantes au service $S(2)$ : $ID_T$, $RT(3)$, $CT(3)$.

Le service $S(2)$ déchiffre le jeton $RT(3)$ avec $K_{S(2)}$ et obtient $ID_{S(3)}$, $ID_{S(2)}$, $ID_{S(1)}$, $RT(4)$.

Puis $S(2)$ vérifie l'identité de l'émetteur (e.g., $S(3)$), son identité, identifie le prochain service $S(1)$ et accède à $RT(4)$, valeur du jeton de routage à transmettre à $S(1)$. Par ailleurs, $S(2)$ génère une estampille temporelle $T_4$ puis calcule $CT(4)$ tel que

$$CT(4) = ENC_{S(2)}\big(CT(3) \,|\, T_4 \,|HMAC_{S(2)}(RT(4), K_{S(2)}), K_{S(2)}\big)$$

Enfin, le service $S(2)$ transmet les données suivantes au service $S1$ : $ID_T$, $RT(4)$, $CT(4)$.

Le service $S(1)$ reçoit $ID_T$, $RT(4)$, $CT(4)$ puis déchiffre le jeton $RT(4)$ avec $K_{S(1)}$ et obtient $ID_{S(2)}$, $ID_{S(1)}$, $ID_{CTRL}$, $RT(5)$.

Puis $S(1)$ vérifie l'identité de l'émetteur (e.g., S(2)), son identité, identifie le prochain service $CTRL$ et accède à $RT(5)$, valeur du jeton de routage à transmettre à $CTRL$. Par ailleurs, $S(1)$ génère une estampille temporelle $T_5$ puis calcule $CT(5)$ tel que

$$CT(5) = ENC_{S(1)}\big(CT(4) \,|\, T_5 \,|HMAC_{S(1)}(RT(5), K_{S(1)}), K_{S(1)}\big)$$

Enfin, le service $S(1)$ transmet les données suivantes au service $CTRL$ : $ID_T$, $RT(5)$, $CT(5)$.

Le service CTRL de contrôle reçoit $ID_T$, $RT(5)$, $CT(5)$ puis accède, avec l'identifiant $ID_T$ reçu, aux donnée suivantes : $ID_T$, $ID_{CTRL}$, $R_{SEC}$, $C_{SEC}$, $T_0$, $RT(0)$,$RT(1)$,$RT(2)$,$RT(3)$,$RT(4)$ et $RT(5)$.

Le service CTRL de contrôle déchiffre le jeton de routage RT(5) à l'aide de sa clef cryptographique $K_{CTRL}$ et obtient alors un identifiant $ID'_T$ identifiant une transaction, $ID'_{CTRL}$, et une valeur secrète de routage $R'_{SEC}$.

Comme indiqué précédemment, le service CTRL de contrôle vérifie si l'identifiant $ID'_T$ obtenu par déchiffrage du jeton $RT(5)$ correspond à l'identifiant de transaction précédemment généré.

Puis le service CTRL de contrôle vérifie si l'identifiant $ID'_{CTRL}$ obtenu par déchiffrage du jeton $RT(5)$ correspond à son propre jeton $ID_{CTRL}$. Si tel est le cas, cela signifie que le service CTRL est le destinataire légitime.

Le service CTRL de contrôle vérifie également si la valeur secrète de routage $R'_{SEC}$ est égale à la valeur secrète de routage $R_{SEC}$ précédemment générée.

Enfin, le service CTRL de contrôle vérifie le passage par les services de la chaîne, conformément à ladite chaîne, par traitement du jeton de chaînage $CT(5)$.

Plus précisément, le service CTRL calcule itérativement

$$CT_{VALID}(4) = DENC_{S(1)}\big(CT(4) \,|\, T_4 \,|HMAC_{S(1)}(RT(5), K_{S(1)}), K_{S(1)}\big) \ldots$$

et

$$CT_{VALID}(0) = DENC\big(C_{SEC} \,|\, T_0 \,|HMAC_{CTRL}(RT(0), K_{CTRL}), K_{CTRL}\big)$$

Le service de contrôle obtient la valeur $CT(0)$ précédemment générée puis vérifie si les valeurs $CT_{VALID}(0)$ et $CT(0)$ sont égales. Si tel est le cas, cela signifie que la transaction $T$ est une transaction atomique.

Le service CTRL de contrôle génère alors un message de validation de l'aspect atomique de la transaction à destination du service $S(1)$.

Dans un mode particulier de mise en oeuvre, le procédé selon l'invention est mis en oeuvre de manière simplifiée, par exemple afin d'être mis en oeuvre sur des équipements et/ou services à faibles capacités techniques, comme certains objets connectés ayant une mémoire et/ou une capacité de traitement limitée. Dans ce cas, les fonctions de chiffrement « *ENC*() » sont remplacées par des fonctions à sens unique, couramment dénommées « fonction de type hachage « $H_{S(i)}()$ ».

Par ailleurs, il importe de noter que bien que le procédé selon l'invention ait été décrit en utilisant un horodatage afin de prévenir une attaque par rejeu, son utilisation reste optionnelle.

En outre, l'adhérence entre les deux jetons de chaînage et de routage, et ce, à chaque itération ou uniquement lors de certains itération du procédé reste également optionnelle.

L'invention a été décrite jusqu'à présent dans le cas les algorithmes de chiffrement des différents services (e.g., du service CTRL de contrôle et des services S(i=1..n)) sont des algorithmes de chiffrement symétriques, mais l'invention n'en reste pas moins applicable dans le cas particulier où au moins un desdits services utilise un algorithme de chiffrement asymétrique.

Enfin, l'invention a été décrite dans le cas général ou des fonctions cryptographiques (e.g., de chiffrement et déchiffrement) sont décrites, mais l'invention n'en reste pas moins applicable dans le cas particulier où ces fonctions se déclinent, au niveau service courant $S(i)$, soit en cryptographie à clef secrète, soit en cryptographie à clef publique.

Dans ce dernier cas, il faut alors comprendre les fonctions HMAC ou de hachage comme l'application d'un algorithme de signature électronique à base d'une clef privée associée au certificat du service courant $S(i)$ sur le motif à signer (soit une exponentiation clef privée sur un haché du motif).

En particulier, si le service CTRL de contrôle et les services disposent de ressources cryptographiques asymétriques, par exemple en disposant de certificats de signature et de chiffrement, alors les opérations de chiffrement et de signature décrites doivent être adaptées à ces ressources. Ainsi les opérations de chiffrement sont mises en oeuvre avec la clef publique de chiffrement de l'entité qui le déchiffre, et les opérations de signature sont mises en oeuvre avec la clef privée de signature de l'émetteur. Symétriquement les opérations de déchiffrement doivent être mises en oeuvre avec la clef privée de chiffrement du destinataire, et les opérations de vérification de signature avec la clef publique de l'émetteur.

En référence au deuxième mode de mise en oeuvre précédemment décrit, le calcul récursif du jeton de routage $RT(i-1)$ en fonction de $RT(i)$ devient alors :

$$RT(i-1) = ENC_{S(i)}\big(ID_{S(i-1)} \mid ID_{S(i)} \mid ID_{S(i+1)} \mid RT(i), KPUB_{S(i)}\big)$$

avec $KPUB_{S(i)}$ une clef publique de chiffrement associée au service $S(i)$, et le calcul cumulatif du jeton de chaînage $CT(i)$ en fonction du jeton de chaînage $CT(i-1)$ devient :

$$CT(i) = ENC_{CTRL}\big(CT(i-1) \mid T_i \mid SIGN_{S(i)}(RT(i), KPRIV_{S(i)}), KPUB_{CTRL}\big)$$

avec $KPUB_{CTRL}$ une clef publique de chiffrement associée au service CTRL de contrôle, $KPRIV_{S(i)}$ une clef privée de chiffrement associée au service $S(i)$, et $SIGN_{S(i)}$ une fonction de signature associée au service $S(i)$.

**Revendications**

1. Procédé de mise en oeuvre d'un service ($S(i)$), dit service courant, d'une chaîne de n services, le procédé comprenant :

    - la réception (S200-1, S200-2, S200-3), en provenance du service ($S(i-1)$) précédent le service courant ($S(i)$) dans la chaîne, d'un premier jeton de routage ($RT(i-1)$) comprenant des données de routage de messages entre les services de la chaîne ;
    - la vérification (S220-1, S220-2, S220-3) que le service courant est un destinataire légitime du premier jeton de routage ($RT(i-1)$) ;
    - la mise en oeuvre (S230-1, S230-2, S3230-3) d'une fonction du service courant ;
    - la génération (S260-1, S260-2, S260-3) d'un jeton de chaînage, dit jeton de chaînage courant ($CT(i)$) à partir d'une donnée (*verif(i)*) de preuve d'un passage par le service courant ($S(i)$) ; et,
    - la transmission (S270-1, S270-2, S270-3), à destination du service ($S(i+1)$) suivant le service courant ($S(i)$) dans la chaîne, du jeton de chaînage courant ($CT(i)$) et d'un deuxième jeton de routage ($RT(i)$) déterminé à partir du premier jeton de routage.

2. Procédé de mise en oeuvre d'un service selon la revendication 1, dans lequel le jeton de chaînage courant ($CT(i)$) est généré en fonction du deuxième jeton de routage ($RT(i)$).

**3.** Procédé de mise en oeuvre d'un service selon la revendication 1 ou 2, dans lequel le service courant comprend un identifiant ($ID_{S(i)}$) de ce service ;

le procédé comprenant en outre l'obtention d'un identifiant ($ID'_{S(i)}$) de service destinataire par application d'une fonction de déchiffrement au premier jeton de routage, la fonction de déchiffrement utilisant une clef de déchiffrement associée au service courant,
et, dans lequel la vérification (S220-1, S220-2, S220-3) que le service courant est un destinataire légitime comprend la comparaison de l'identifiant ($ID'_{S(i)}$) de service destinataire avec l'identifiant ($ID_{S(i)}$) de ce service.

**4.** Procédé de mise en oeuvre d'un service selon l'une des revendications 1 à 3, dans lequel le deuxième jeton de routage ($CR(i)$) est généré par application d'une fonction de déchiffrement au premier jeton de routage ($CR(i - 1)$), la fonction de déchiffrement utilisant une clef de déchiffrement ($DENC_{S(i)}$) associée au service courant.

**5.** Procédé de mise en oeuvre d'un service selon l'une des revendications 1 à 4, comprenant en outre :

- la génération (S250-1, S250-2, S250-3), par le service courant, de la donnée ($verif(i)$) de preuve d'un passage par le service courant ($S(i)$), la donnée ($verif(i)$) étant générée par application d'une fonction de hachage au deuxième jeton de routage ($CR(i)$) ; et,
- la transmission (S270-1, S270-2, S270-3) de la donnée ($verif(i)$) par le service courant à destination du service suivant ou à destination d'un service (CTRL) de contrôle.

**6.** Procédé de mise en oeuvre d'un service selon l'une des revendications 1 à 5, comprenant en outre :

- la réception (S200-2), par le service courant, d'une donnée ($verif(i -1)$) de preuve que le service précédent ($S(i - 1)$) a effectivement été appliqué ; et,
- la transmission (S270-2) de la donnée reçue ($verif(i - 1)$), par le service courant et à destination du service suivant.

**7.** Procédé de mise en oeuvre d'un service selon l'une des revendications 1 à 6, dans lequel des fonctions de chiffrement, déchiffrement, signature et identification au niveau du service ($S(i)$) sont basées sur des technologies cryptographiques à clef publique, et référent un certificat électronique associé.

**8.** Procédé de vérification d'une chaîne de n services, le procédé étant mis en oeuvre par un service (CTRL) de contrôle et comprenant :

- la réception (S140) d'un jeton de routage ($RT(n)$) en provenance du n-ième service de la chaîne, d'un jeton de chaînage ($CT(n)$) en provenance du n-ième service de la chaîne, et de n données ($verif(i = 1..n)$) de preuve, chaque donnée $verif(i)$ étant générée par un service $S(i)$ de la chaîne ;
- la vérification (S160) que le service (CTRL) de contrôle est un destinataire légitime du jeton de routage ($RT(n)$) ; et,
- la vérification (S170) d'un passage par les n services de la chaîne conformément à ladite chaîne, par traitement du jeton de chaînage ($C(T(n))$) et des n données de preuve.

**9.** Procédé de vérification selon la revendication 8, dans lequel le service (CTRL) de contrôle comprend un identifiant ($ID_{CTRL}$) de ce service de contrôle,

- le procédé comprenant en outre l'obtention, par le service (CTRL) de contrôle, d'un identifiant ($ID'_{CTRL}$) de service destinataire par application d'une fonction de déchiffrement au jeton de routage $RT(n)$, la fonction de déchiffrement utilisant une clef de déchiffrement ($K_{CTRL}$) associée au service (CTRL) de contrôle,
- et, dans lequel la vérification (S160) que le service de contrôle est un destinataire légitime comprend la comparaison de l'identifiant ($ID'_{CTRL}$) de service destinataire avec l'identifiant ($ID_{CTRL}$) de ce service de contrôle.

**10.** Procédé de vérification selon la revendication 8 ou 9, comprenant en outre :

- l'obtention, par le service (CTRL) de contrôle, d'une première valeur secrète ($R_{SEC}$) utilisée pour la génération d'un jeton de routage ($RT(0)$) préalablement transmis au premier service de la chaîne ;
- l'obtention, par le service (CTRL) de contrôle, d'une deuxième valeur secrète ($R_{SEC}'$) par application (S150) d'une fonction de déchiffrement au jeton de routage $RT(n)$, la fonction de déchiffrement utilisant une clef de déchiffrement ($K_{CTRL}$) associée au service (CTRL) de contrôle ; et,
- la comparaison (S165), par le service (CTRL) de contrôle, de la première valeur secrète ($R_{SEC}$) et de la deuxième valeur secrète ($R_{SEC}$').

**11.** Procédé de vérification selon l'une des revendications 8 à 10, dans lequel la vérification (S170) d'un passage par les n services de la chaîne comprend :

- le calcul (S1710) d'un jeton de chaînage $CT(i)$ en fonction d'une donnée de preuve *verif($i$ + 1)*, pour $i = n..0$;
- l'obtention (S1720, S1730) un jeton $CT(0)$' de référence résultant de l'application d'une fonction de chiffrement à une valeur *verif(0)* utilisée pour générer un jeton de chaînage $CT(0)$ initial préalablement été transmis au premier service $S(1)$ de la chaîne, la fonction de chiffrement utilisant une clef de chiffrement $K_{CTRL}$ associée au service (CTRL) de contrôle ; et,
- la comparaison (S1740) entre le jeton calculé $CT(i)$ pour $i = 0$ et le jeton $CT(0)$' de référence.

**12.** Procédé de vérification selon l'une des revendications 8 à 11 comprenant en outre la génération (S120) d'un jeton de routage $RT(0)$ de manière récursive à partir d'un jeton de routage $RT(n)$.

**13.** Dispositif électronique de mise en oeuvre d'au moins un service ($s(i)$) comprenant :

- un module de réception (MOD_RX) d'un premier jeton de routage ($RT(i$ -1)) comprenant des données de routage de messages entre les services d'une chaîne de services ;
- un module de vérification (MOD_DEST) que le au moins un service est un destinataire légitime du premier jeton de routage ($RT(i$ - 1)) ;
- un module de mise en oeuvre (MOD_CS) d'une fonction du service ($S(i)$) ;
- un module de génération (MOD_CT) d'un jeton de chaînage à partir d'une donnée *verif($i$)* de preuve d'un passage par le service courant ($S(i)$); et,
- un module de transmission (MOD_TX), à destination du service ($S(i$ + 1)) suivant ledit service ($S(i)$) dans la chaîne, du jeton de chaînage courant ($CT(i)$) et d'un deuxième jeton de routage ($RT(i)$) déterminé à partir du premier jeton de routage ($RT(i$ -1)).

**14.** Dispositif électronique de vérification d'une chaîne de n services incluant un service de contrôle (ctrl) comprenant :

- un module de réception (MOD_RX) d'un jeton de routage $RT(n)$ en provenance du n-ième service de la chaîne, d'un jeton de chaînage $CT(n)$ en provenance du n-ième service de la chaîne, et de n données (*verif($i$ = 1..$n$)*) de preuve, chaque donnée *verif($i$)* étant générée par un service $S(i)$ de la chaîne ;
- un module de vérification (MOD_DEST) que ledit service (CTRL) de contrôle est un destinataire légitime du jeton de routage ($RT(n)$) ; et,
- un module de vérification (MOD_PROC) d'un passage par les n services de la chaîne, conformément à ladite chaîne, par traitement du jeton de chaînage ($CT(n)$) et des *n* données de preuve.

**15.** Programme d'ordinateur comportant des instructions pour la mise en oeuvre d'un procédé de mise en oeuvre d'un service selon l'une quelconque des revendications 1 à 7, ou d'un procédé de vérification d'une chaîne de services selon l'une quelconque des revendications 8 à 12, lorsque ledit programme est exécuté par un ordinateur.

[Fig.1]

[Fig.2A]

$D_S$

MOD_RX

MOD_DEST

MOD_CS

MOD_CT

MOD_TX

[Fig.2B]

$D_{CTRL}$

MOD_RX

MOD_DEST

MOD_PROC

[Fig.3A]

[Fig.3B]

[Fig.4]

SEQ = [S(1), S(2), S(3), S(4)]

EP 4 354 823 A1

[Fig.5A]

24

[Fig.5B]

[Fig.6A]

EP 4 354 823 A1

CTRL   $ENC_{CTRL}$; $K_{CTRL}$; $ID_{CTRL}$; $H_{CTRL}$

S1   $ENC_{S1}$; $K_{S1}$; $ID_{S1}$; $H_{S1}$

S2   $ENC_{S2}$; $K_{S2}$; $ID_{S2}$; $H_{S2}$

S3   $ENC_{S3}$; $K_{S3}$; $ID_{S3}$; $H_{S3}$

SEQ →

S100

S105   $T_0$

S110   $T_{ID}$

S115   $R_{SEC}$, $C_{SEC}$

S120   $R_{T0}$

S130   $C_{T0}$

S135 —— $T_{ID}$, $R_{T0}$, $C_{T0}$ —→ S200-1

S210-1   DEC $RT_0$

S215-1

S220-1   $ID'_{S1}{}^1 \overset{?}{=} ID_{S1'}$

S230-1   $f_1$

S240-1   $T_1$

S260-1   $CT_1$

S270-1 —— $T_{ID}$; $RT_1$; $CT_1$ —→ S200-2

S210-2

[Fig.6B]

[Fig.7]

Europäisches
Patentamt

European
Patent Office

Office européen
des brevets

# RAPPORT DE RECHERCHE EUROPEENNE

Numéro de la demande

EP 23 20 2895

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/315819 A1 (DARA VENKATA KRISHNA SASHANK [IN] ET AL) 27 octobre 2016 (2016-10-27) * alinéa [0028] * * alinéa [0085] – alinéa [0095]; figures 1, 7,9 * | 1-15 | INV. H04L45/0377 H04L45/00 H04L45/50 H04L45/64 |
| A | US 2014/198791 A1 (LIM CHANG-GYU [KR]) 17 juillet 2014 (2014-07-17) * le document en entier * | 1-15 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| La Haye | 1 février 2024 | Perrier, Samuel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 20 2895

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-02-2024

| Document brevet cité au rapport de recherche | Date de publication | Membre(s) de la famille de brevet(s) | Date de publication |
|---|---|---|---|
| US 2016315819 A1 | 27-10-2016 | CN 107567704 A | 09-01-2018 |
| | | EP 3289727 A1 | 07-03-2018 |
| | | US 2016315819 A1 | 27-10-2016 |
| | | US 2016315850 A1 | 27-10-2016 |
| | | US 2016315921 A1 | 27-10-2016 |
| | | WO 2016176070 A1 | 03-11-2016 |
| US 2014198791 A1 | 17-07-2014 | KR 20140092686 A | 24-07-2014 |
| | | US 2014198791 A1 | 17-07-2014 |

EPO FORM P0460

Pour tout renseignement concernant cette annexe : voir Journal Officiel de l'Office européen des brevets, No.12/82